# EUROPEAN PATENT APPLICATION

(11) **EP 4 668 201 A1**
(43) Date of publication of application: **24.12.2025**
(21) Application number: 24756625.0
(22) Date of filing: 29.01.2024
(51) Int. Cl.: G06Q 50/10

(54) **INFORMATION PROCESSING DEVICE, INFORMATION PROCESSING METHOD, AND PROGRAM**

(30) Priority: 13.02.2023 JP 2023019804
(71) Applicant: Sony Group Corporation, Tokyo 108-0075 (JP)
(72) Inventor: SUZUKI Godai, Tokyo 105-0014 (JP); FUNABASHI Masatoshi, Tokyo 105-0014 (JP)
(74) Representative: Witte, Weller & Partner Patentanwälte mbB
(86) International application number: PCT/JP2024/002560
(87) International publication number: WO 2024/171774

(57) **Abstract**

The present technology relates to an information processing device, an information processing method, and a program that enable a user to easily ascertain the condition of an ecosystem, for example.

An assessment unit assesses, based on biodiversity, carbon stock, and carbon flow of a target ecosystem that is to be assessed, a condition of the target ecosystem. The present technology can be applied to, for example, an ecosystem support system that supports the creation of an augmented ecosystem.

## Description

### [Technical Field]

The present technology relates to an information processing device, an information processing method, and a program, and particularly to an information processing device, an information processing method, and a program that enable a user to easily ascertain the condition of an ecosystem, for example.

### [Background Art]

One technology that has been proposed for assessing forest value is a technology that visualizes the amount of carbon fixed in each part of, for instance, trunks, branches, leaves, and soil in an area, as well as the number of species, for instance, insects and birds that live in the area (see PTL 1, for example).

### [Citation List]

### [Patent Literature]

[PTL 1]
JP 2014-182598A

### [Summary]

### [Technical Problem]

In recent years, Synecoculture (registered trademark) attracts attention as a method of producing useful plants in an ecologically optimized condition while realizing species diversity that exceeds species diversity in natural conditions through vegetation arrangement, based on the thinning and harvesting of densely mixed plants under the restrictive conditions of no tillage, no fertilizer, no pesticides, and no use of anything other than seeds and seedlings.

According to Synecoculture (registered trademark), a wide variety of plant species can be introduced to create an augmented ecosystem with enhanced biodiversity and ecosystem function. More information on augmented ecosystems can be found in, for example, Reference 1: Funabashi, M. Human augmentation of ecosystems: objectives for food production and science by 2045. npj Sci Food 2, 16 (2018) (https:// doi.org/10.1038/s41538-018-0026-4).

When managing the augmentation of an ecosystem through human activities such as the practice of Synecoculture (registered trademark), i.e., the creation of an augmented ecosystem (ecosystem augmentation management), the user in charge of the management needs to ascertain how the condition of the ecosystem has changed as a result of the introduction of various species into the ecosystem.

For example, in ecosystem augmentation management, it is necessary to ascertain whether the introduction of species has enhanced biodiversity and, furthermore, whether enhanced biodiversity has enhanced ecosystem functions such as carbon fixation.

The present technology has been made in view of such circumstances, and is intended to enable users to easily ascertain the condition of an ecosystem, and in particular, to easily ascertain, for example, that enhanced biodiversity results in enhanced ecosystem functions such as carbon fixation.

### [Solution to Problem]

An information processing device or a program according to the present technology is an information processing device including an assessment unit that assesses, based on biodiversity, carbon stock, and carbon flow of a target ecosystem that is to be assessed, a condition of the target ecosystem, or a program for causing a computer to function as such an information processing device.

An information processing method according to the present technology is an information processing method including assessing, based on biodiversity, carbon stock, and carbon flow of a target ecosystem that is to be assessed, a condition of the target ecosystem.

In the present technology, based on biodiversity, carbon stock, and carbon flow of a target ecosystem that is to be assessed, a condition of the target ecosystem is assessed.

The information processing apparatus may be an independent apparatus or may be an internal block constituting a single apparatus.

The program can be provided by being transmitted over a transmission medium or by being recorded in a recording medium.

### [Brief Description of Drawings]

[Fig. 1]

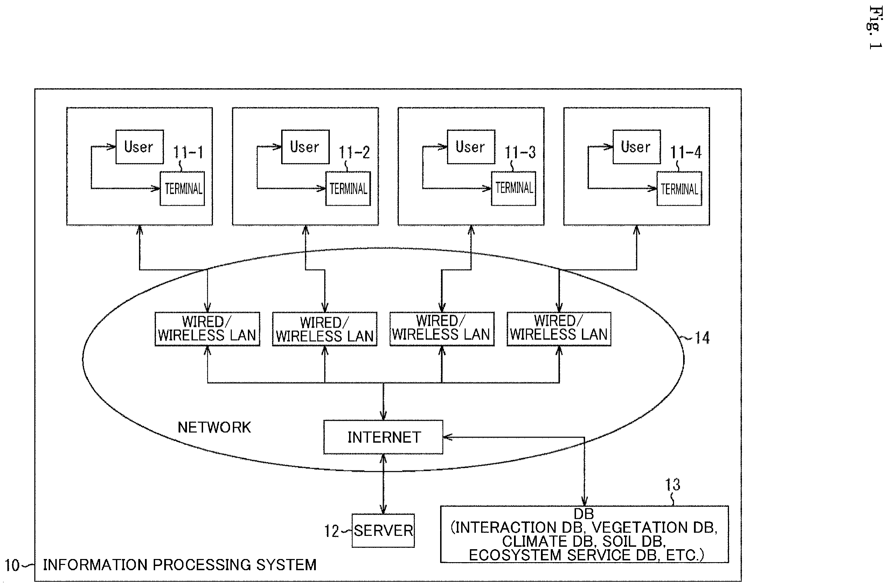

   Fig. 1 is a diagram illustrating a configuration example of an embodiment of an information processing system to which the present technology is applied.
[Fig. 2]

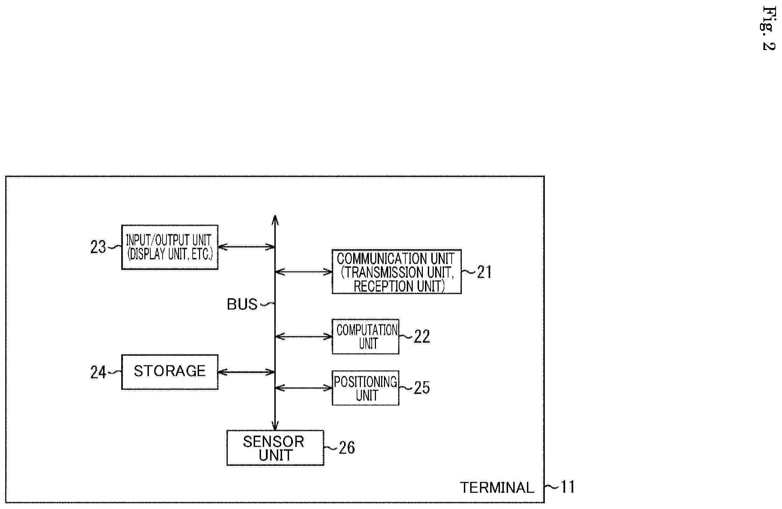

   Fig. 2 is a diagram illustrating a hardware configuration example of a terminal 11.
[Fig. 3]

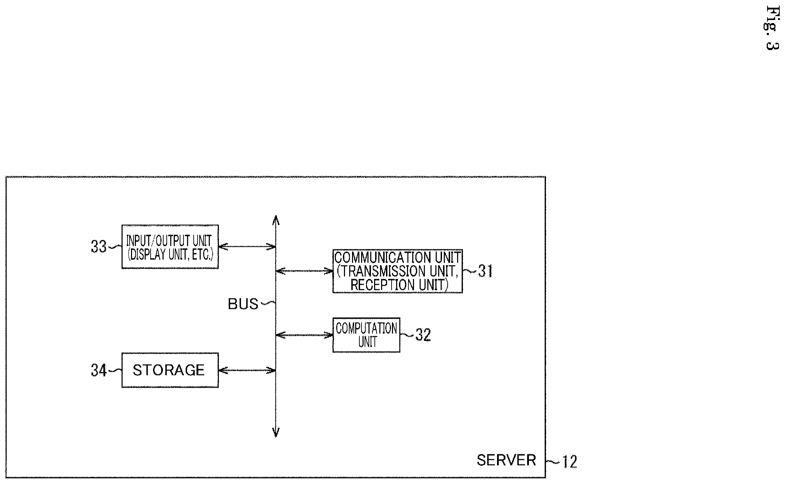

   Fig. 3 is a diagram illustrating a hardware configuration example of a server 12.
[Fig. 4]

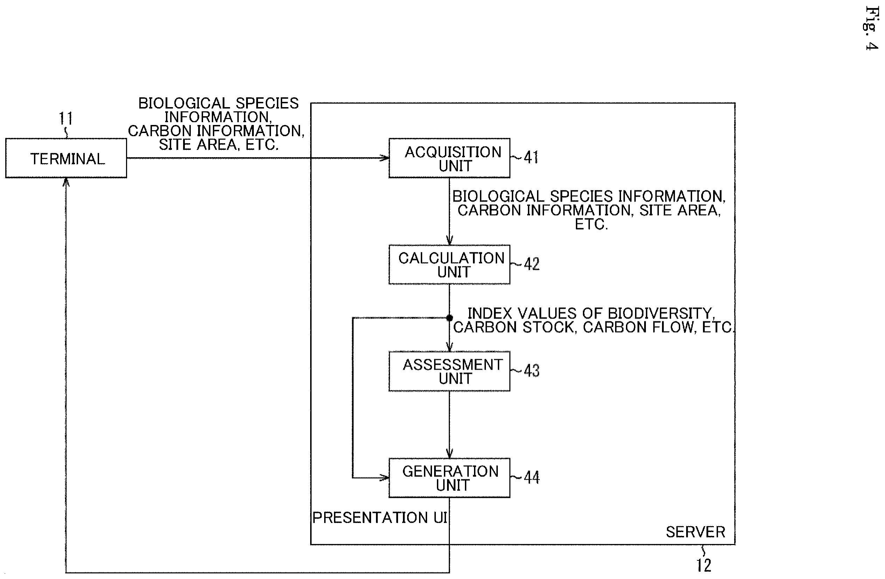

   Fig. 4 is a block diagram illustrating a functional configuration example of the server 12.
[Fig. 5]

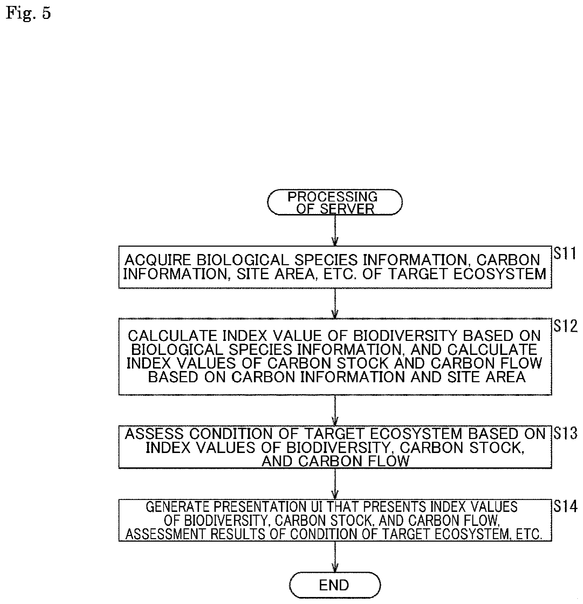

   Fig. 5 is a flowchart illustrating an example of processing of the server 12.
[Fig. 6]

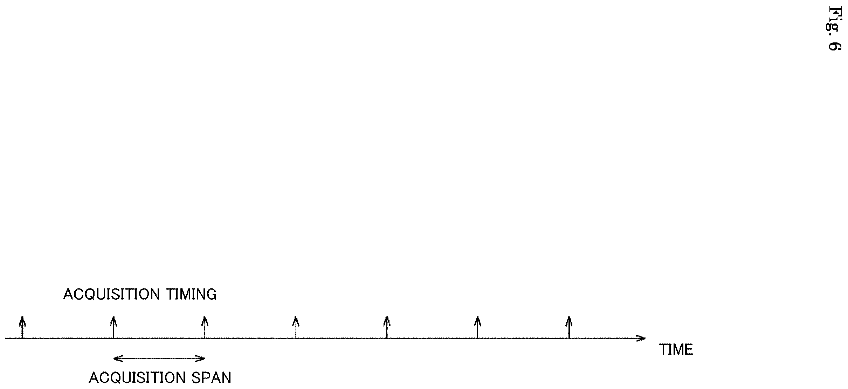

   Fig. 6 illustrates acquisition timings.
[Fig. 7]

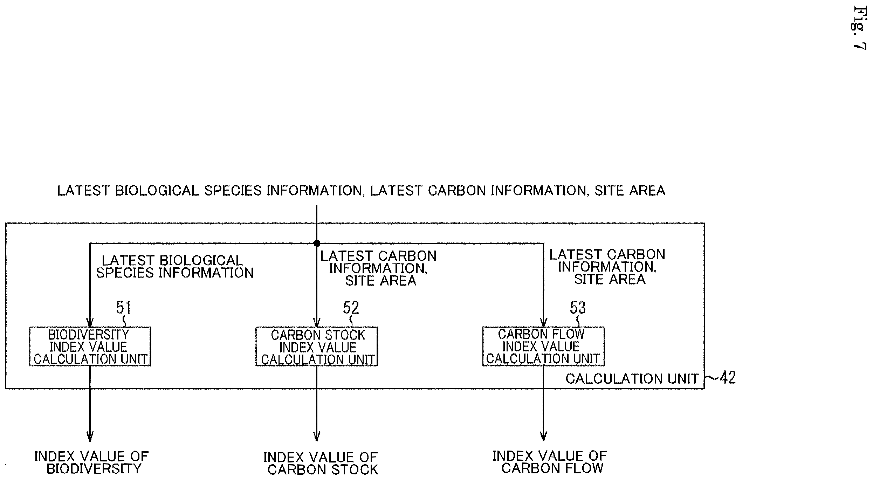

   Fig. 7 is a block diagram illustrating a configuration example of a calculation unit 42.
[Fig. 8]

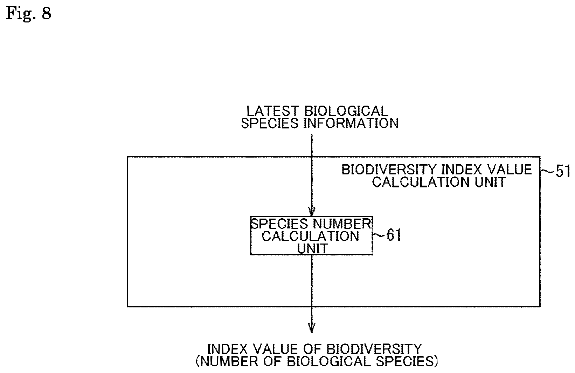

   Fig. 8 is a block diagram illustrating a first configuration example of a biodiversity index value calculation unit 51.
[Fig. 9]

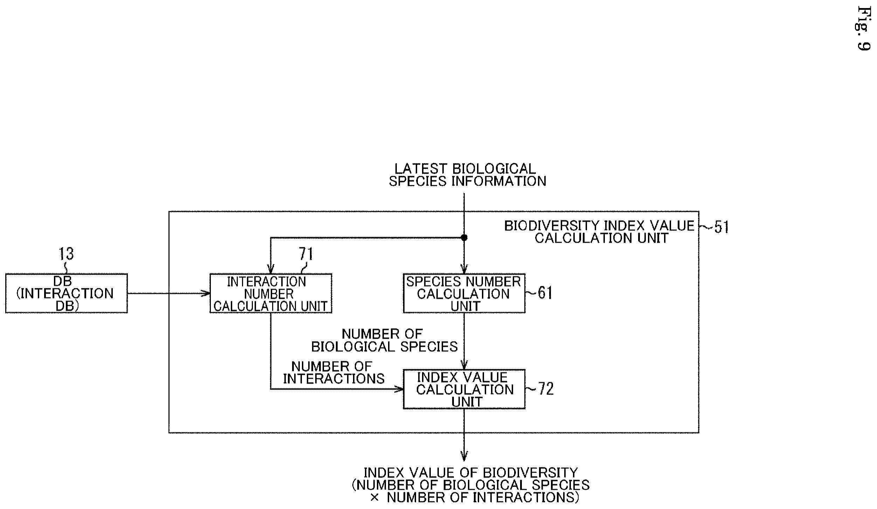

   Fig. 9 is a block diagram illustrating a second configuration example of the biodiversity index value calculation unit 51.
[Fig. 10]

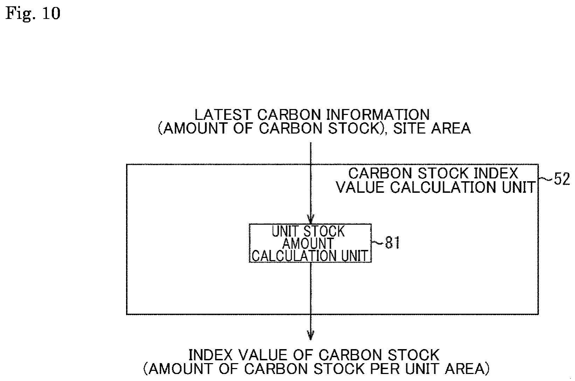

   Fig. 10 is a block diagram illustrating a configuration example of a carbon stock index value calculation unit 52.
[Fig. 11]

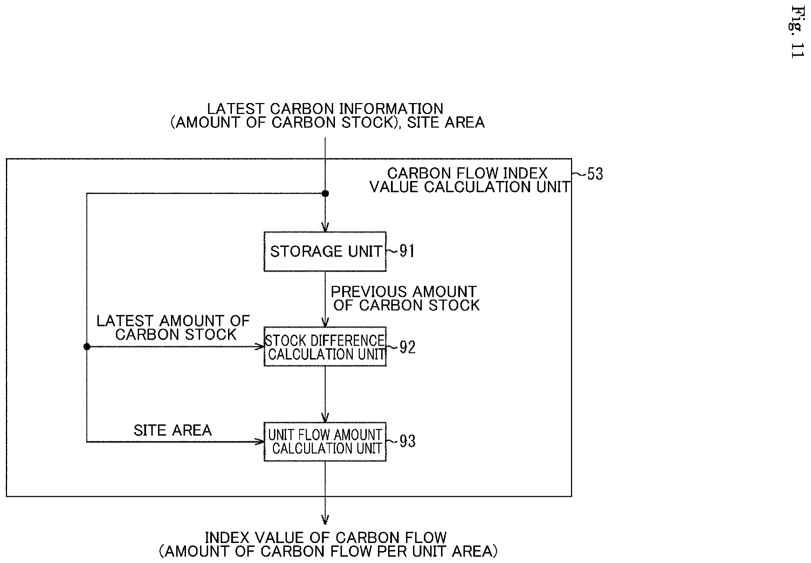

   Fig. 11 is a block diagram illustrating a first configuration example of a carbon flow index value calculation unit 53.
[Fig. 12]

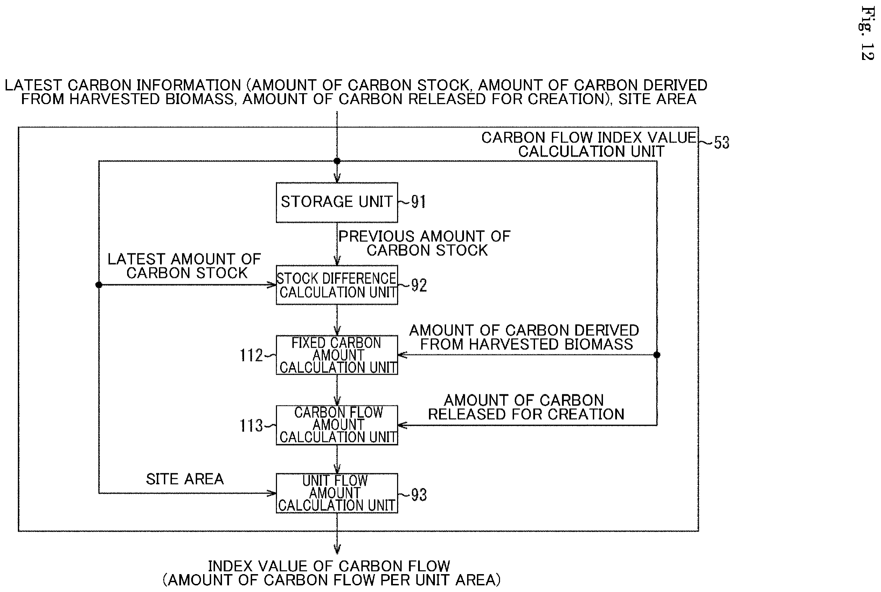

   Fig. 12 is a block diagram illustrating a second configuration example of the carbon flow index value calculation unit 53.
[Fig. 13]

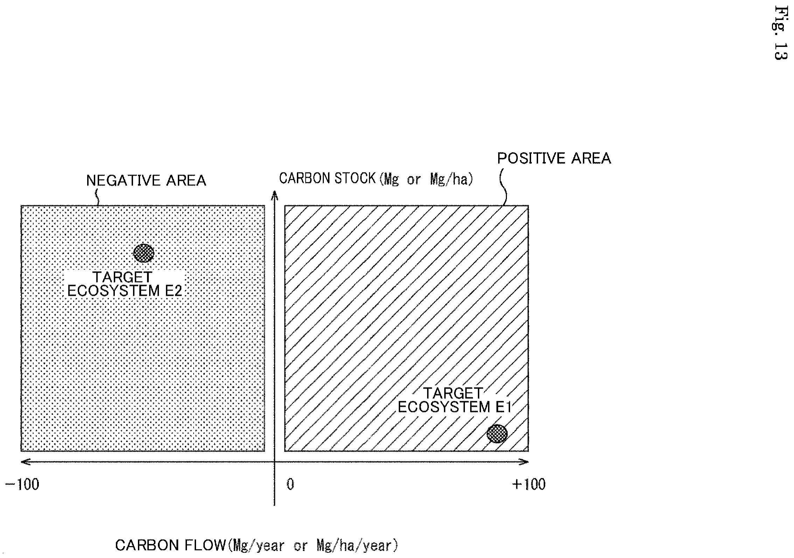

   Fig. 13 illustrates a first display example of a presentation UI.
[Fig. 14]

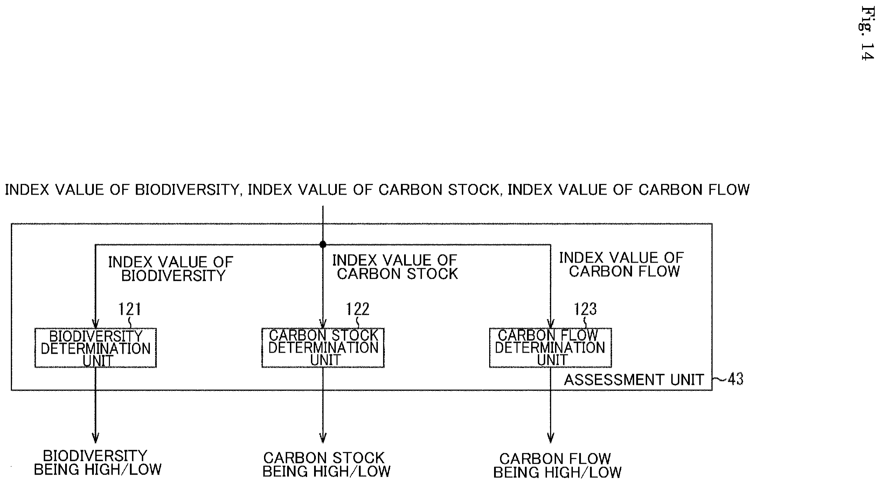

   Fig. 14 is a block diagram illustrating a first configuration example of an assessment unit 43.
[Fig. 15]

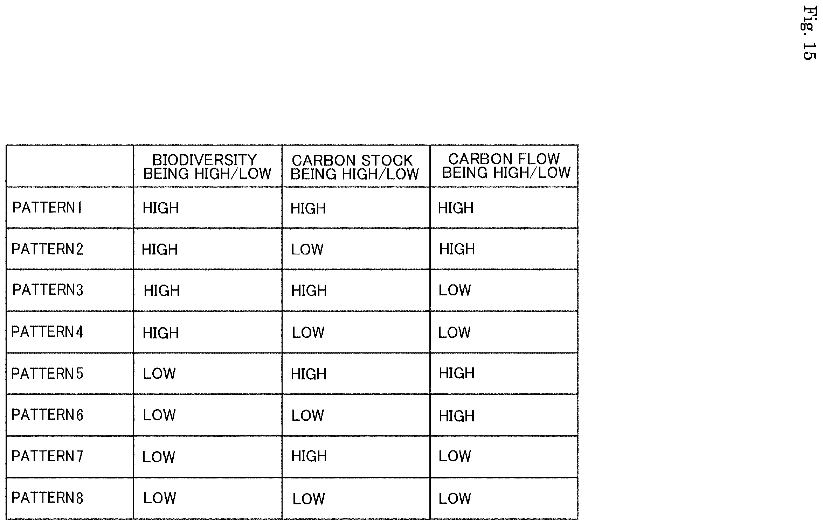

   Fig. 15 illustrates an example of assessment results of the condition of a target ecosystem.
[Fig. 16]

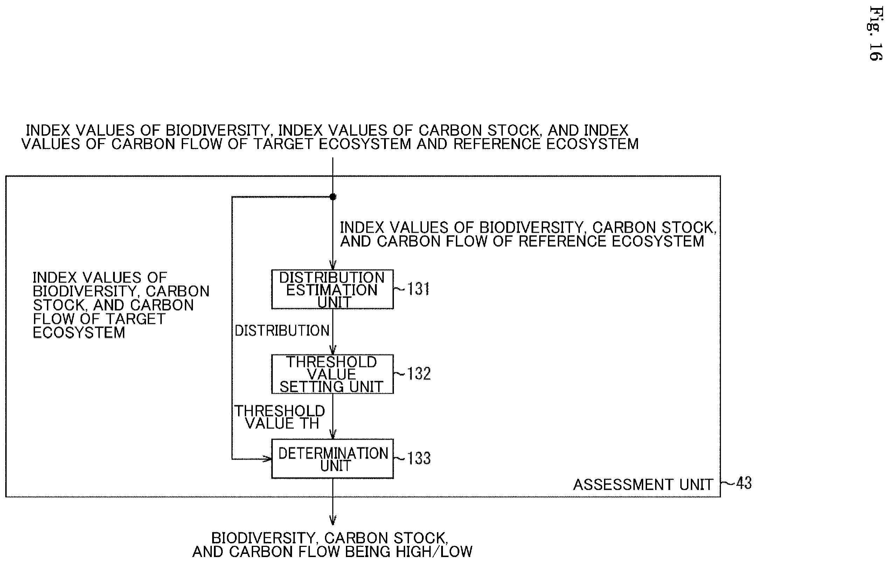

   Fig. 16 is a block diagram illustrating a second configuration example of the assessment unit 43.
[Fig. 17]

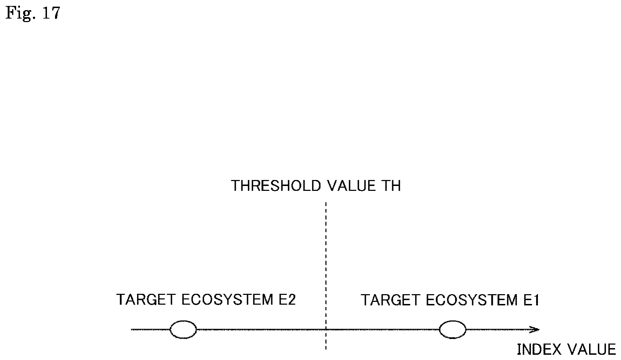

   Fig. 17 illustrates an example of assessment results of the conditions of target ecosystems.
[Fig. 18]

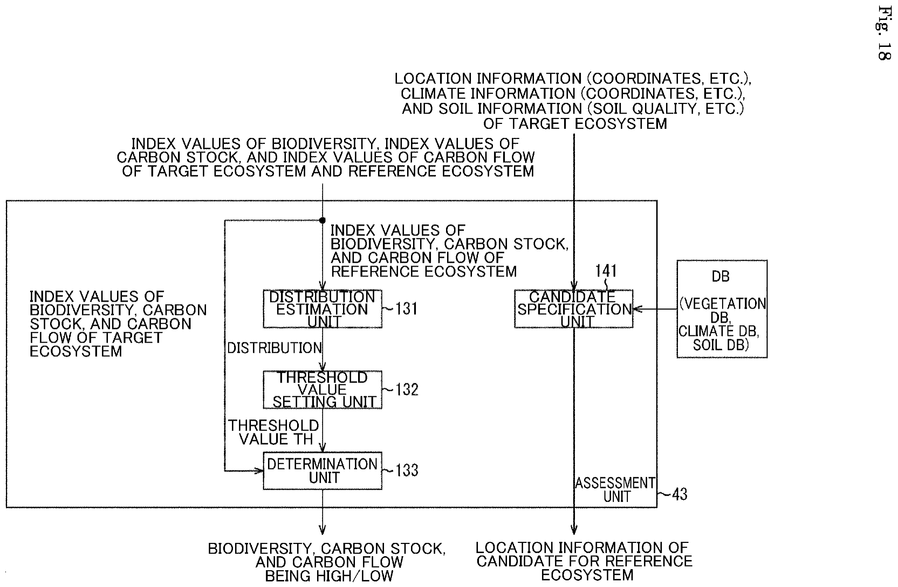

   Fig. 18 is a block diagram illustrating a third configuration example of the assessment unit 43.
[Fig. 19]

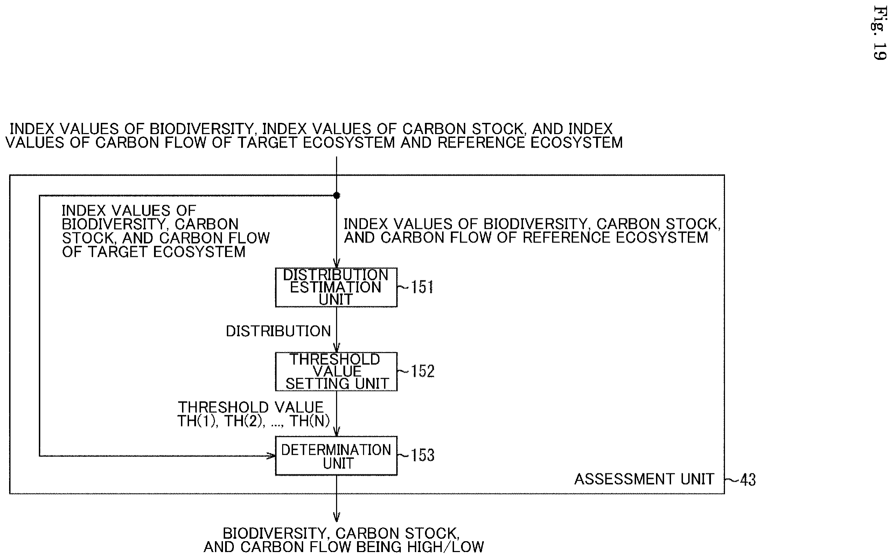

   Fig. 19 is a block diagram illustrating a fourth configuration example of the assessment unit 43.
[Fig. 20]

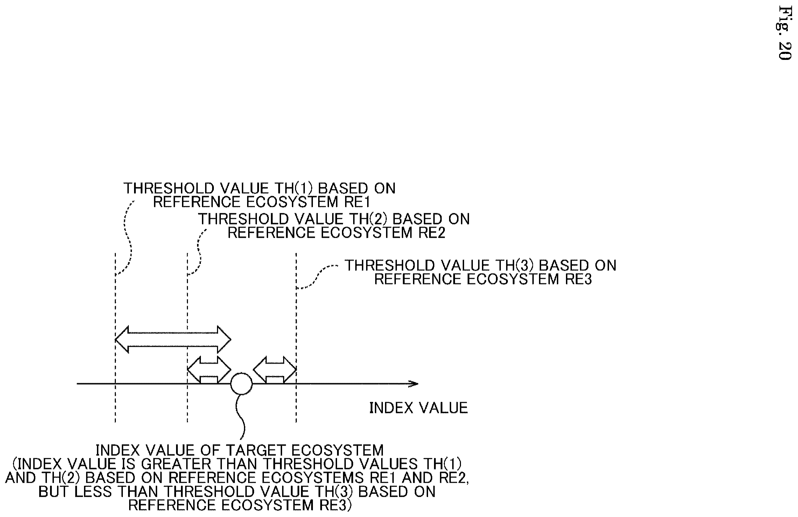

   Fig. 20 illustrates an example of an assessment result of the condition of a target ecosystem.
[Fig. 21]

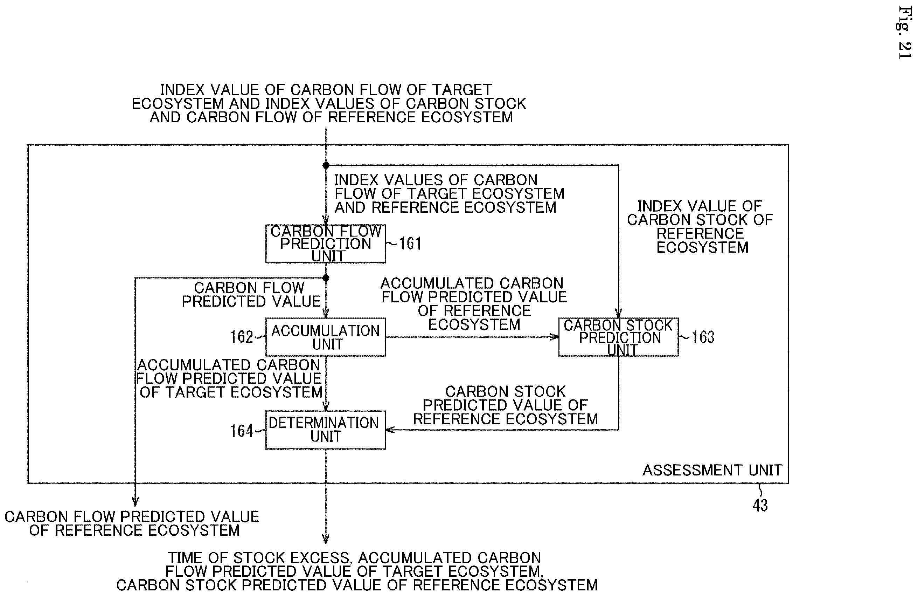

   Fig. 21 is a block diagram illustrating a fifth configuration example of the assessment unit 43.
[Fig. 22]

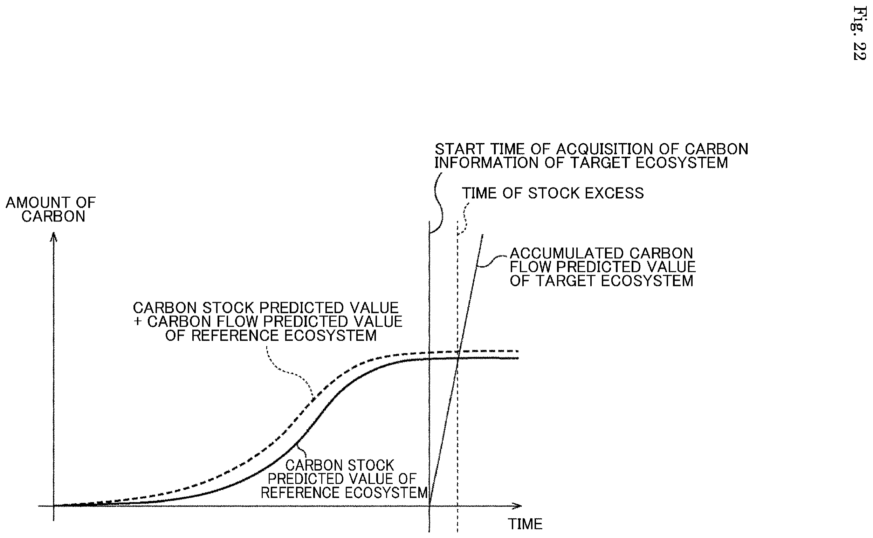

   Fig. 22 illustrates a second display example of the presentation UI.
[Fig. 23]

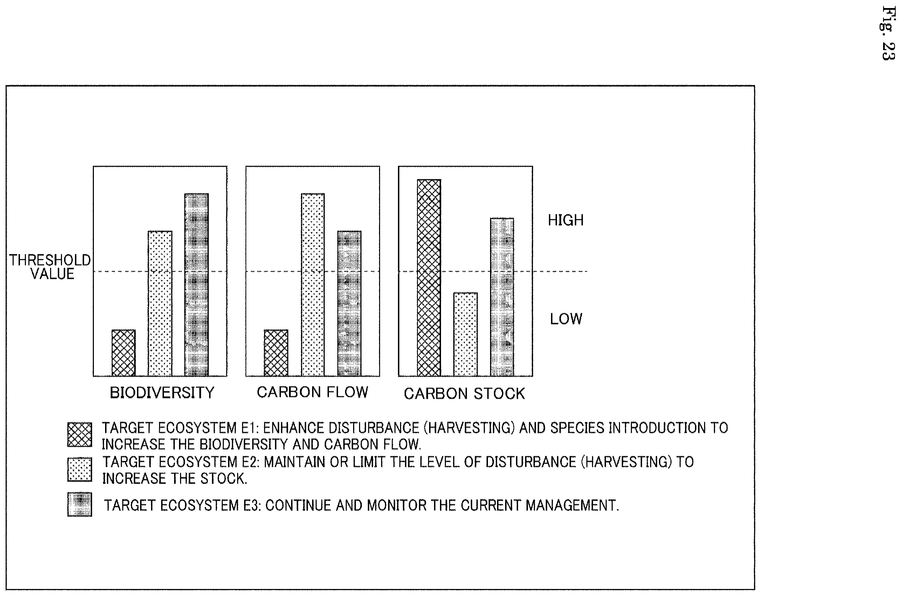

   Fig. 23 illustrates a third display example of the presentation UI.
[Fig. 24]

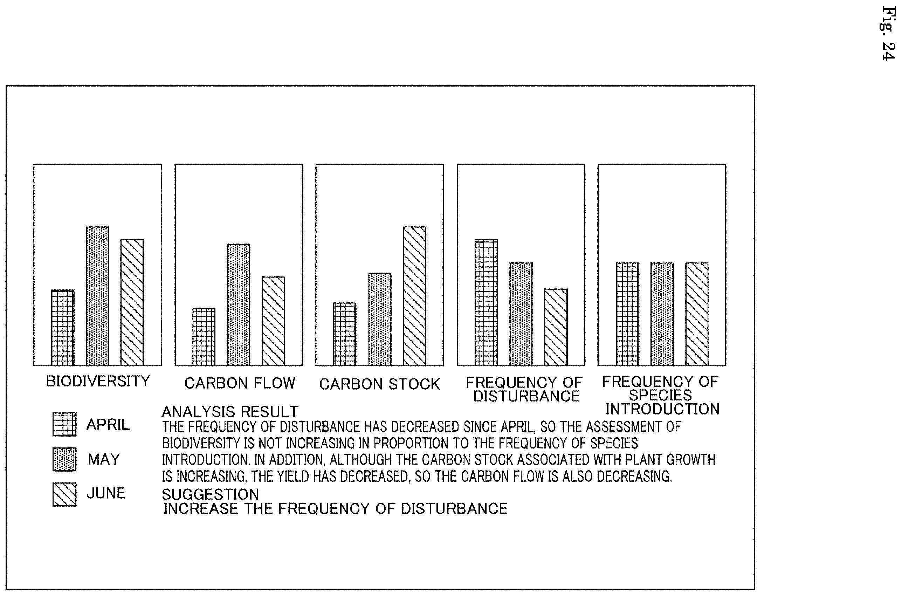

   Fig. 24 illustrates a fourth display example of the presentation UI.
[Fig. 25]

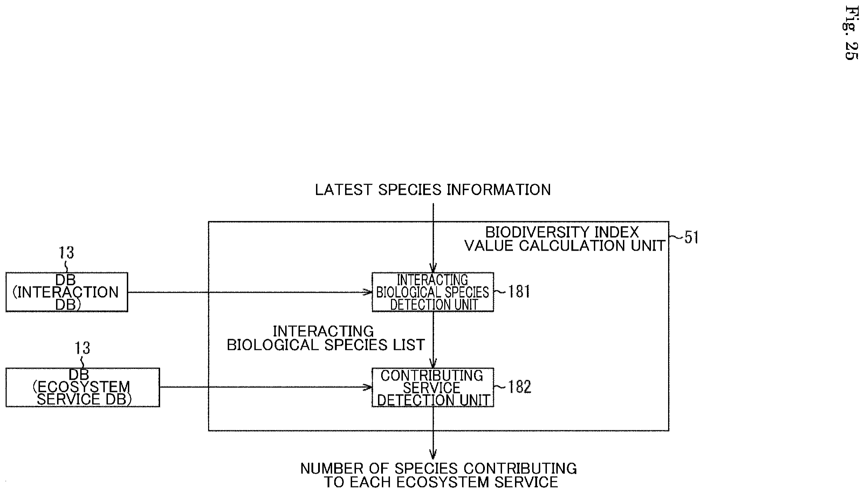

   Fig. 25 is a block diagram illustrating a third configuration example of the biodiversity index value calculation unit 51.
[Fig. 26]

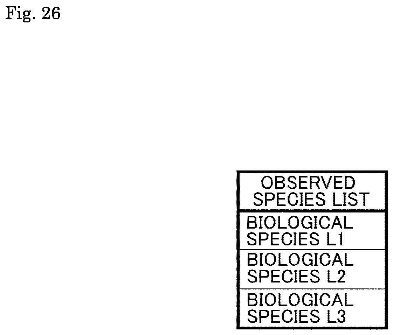

   Fig. 26 illustrates an example of an observed species list as the latest biological species information.
[Fig. 27]

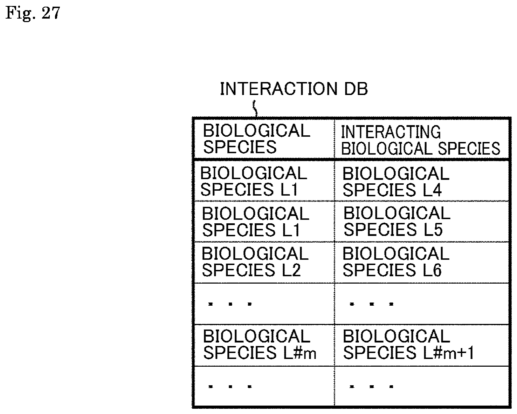

   Fig. 27 illustrates an example of an interaction DB of a DB 13.
[Fig. 28]

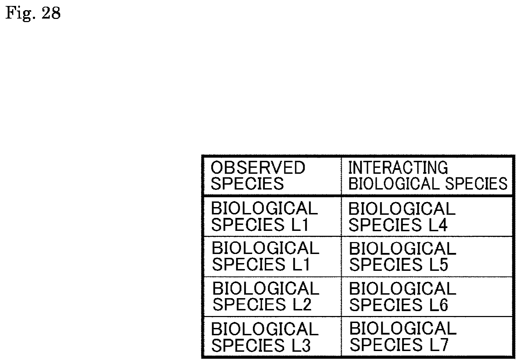

   Fig. 28 illustrates an example of an interacting biological species list.
[Fig. 29]

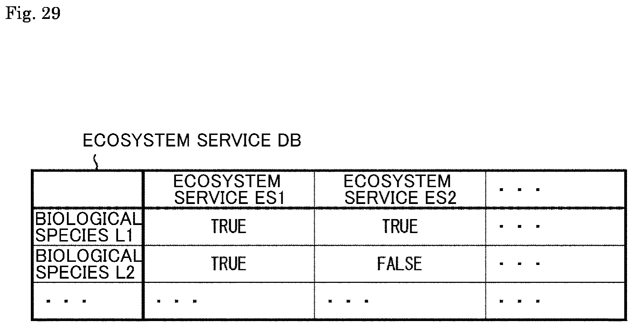

   Fig. 29 illustrates an example of an ecosystem service DB of the DB 13.
[Fig. 30]

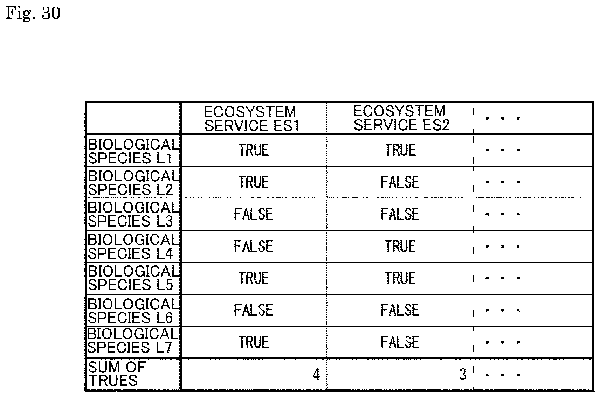

   Fig. 30 illustrates an example of processing of a contributing service detection unit 182.
[Fig. 31]

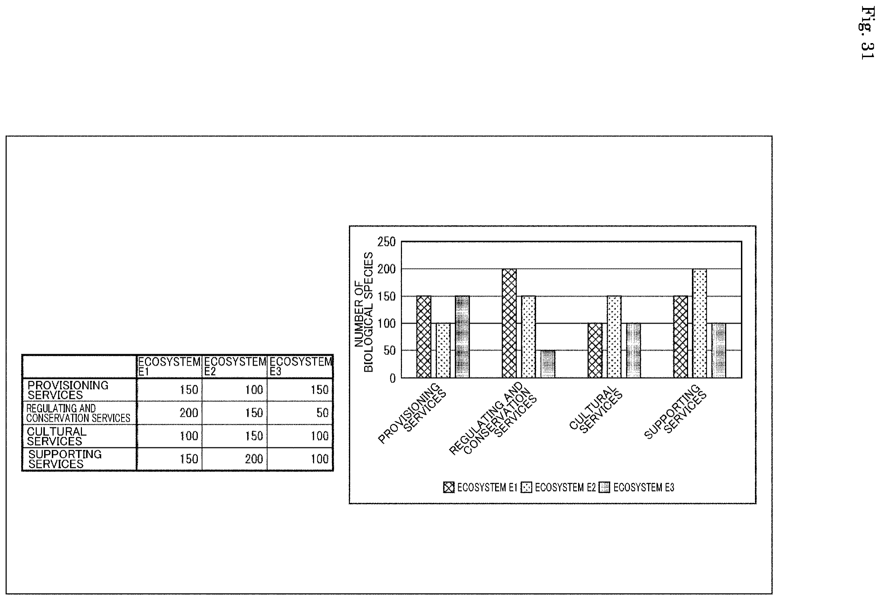

   Fig. 31 illustrates a fifth display example of the presentation UI.
[Fig. 32]

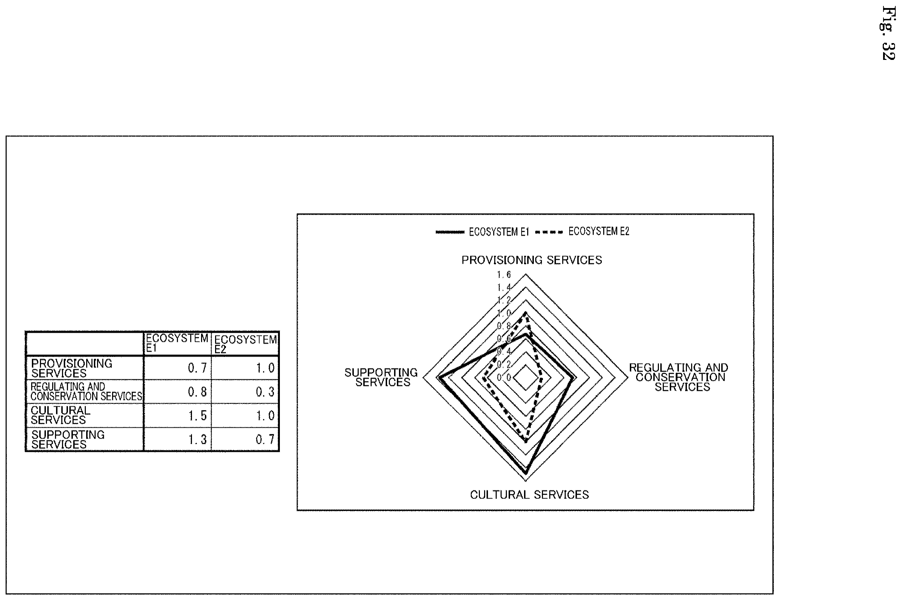

   Fig. 32 illustrates a sixth display example of the presentation UI.
[Fig. 33]

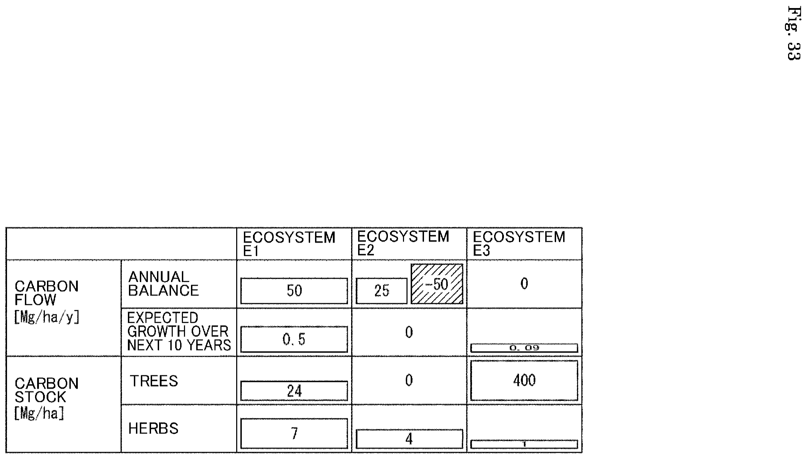

   Fig. 33 illustrates a seventh display example of the presentation UI.
[Fig. 34]

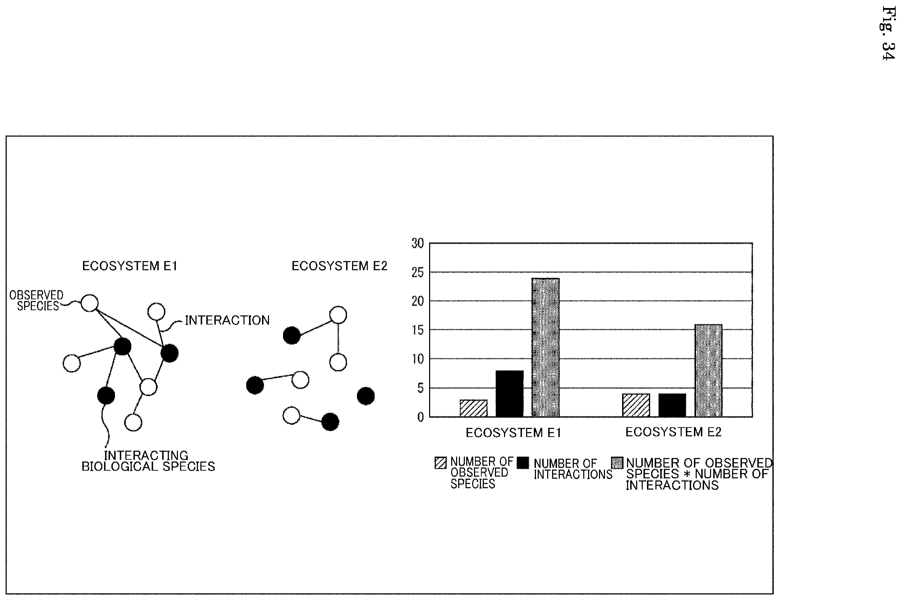

   Fig. 34 illustrates an eighth display example of the presentation UI.
[Fig. 35]

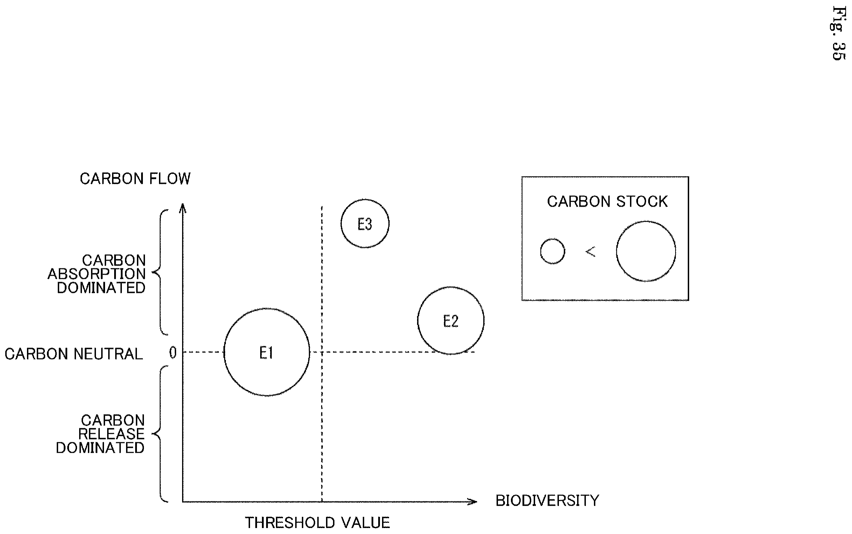

   Fig. 35 illustrates a ninth display example of the presentation UI.

### [Description of Embodiments]

### <One Embodiment of Information Processing System to Which Present Technique is Applied>

Fig. 1 is a diagram illustrating a configuration example of an embodiment of an information processing system to which the present technology is applied.

The information processing system 10 assesses, based on the biodiversity, carbon stock, and carbon flow of a target ecosystem that is an ecosystem to be assessed, the condition of the target ecosystem, and makes it possible to know the condition of the ecosystem that has been created, thereby forming an ecosystem support system that supports the creation of an ecosystem that is in line with the purpose (creation purpose) of creating the target ecosystem, for example, an augmented ecosystem.

As used herein, the carbon stock of the target ecosystem means that carbon has been fixed (stored) in the target ecosystem, or the amount of the fixed carbon. The carbon flow of the target ecosystem means a carbon balance associated with the target ecosystem, including carbon fixed in the target ecosystem and carbon released in association with the target ecosystem.

The information processing system 10 aims to enable a user to ascertain the condition of the ecosystem, in particular, the impact on environmental improvement (restoration) of human activities carried out by various entities, such as individuals, companies, and governments. For example, based on the theory of augmented ecosystems (Reference 1), the information processing system 10 enables a user to ascertain whether an environmental improvement effect has been achieved as a result of the improvement of biodiversity through human activities and the augmentation of ecosystem functions associated with the improvement of biodiversity. The information processing system 10 handles carbon fixation as an ecosystem function. In this case, the environmental improvement effect is, for example, whether carbon neutrality or carbon negative has been achieved.

Specifically, the information processing system 10 assesses the condition of the target ecosystem based on the biodiversity, carbon stock, and carbon flow of the target ecosystem.

For example, the information processing system 10 calculates an index value of biodiversity to quantify the complexity of an ecosystem network that is the basis of ecosystem functions, and calculates index values of carbon stock and carbon flow to quantify the carbon fixation capacity. The information processing system 10 then assesses the condition of the target ecosystem based on the index values of the biodiversity, carbon stock, and carbon flow of the target ecosystem. For example, the information processing system 10 assesses the complexity of the ecosystem network (high or low biodiversity, etc.) and the carbon fixation capacity (high or low carbon stock and carbon flow, etc.).

The user can easily ascertain that well balanced and high assessment results of the complexity of the ecosystem network and the carbon fixation capacity result in the target ecosystem with good condition, for example, that high biodiversity results in a high ecosystem function for carbon fixation.

For ecosystem augmentation management that augments a target ecosystem (where the target ecosystem is an augmented ecosystem), the user can determine whether the ecosystem augmentation management is successful or not by ascertaining the condition of the target ecosystem after the ecosystem augmentation management.

The target ecosystem to be adopted herein is one that actually exist. However, as the target ecosystem, instead of an actually existing ecosystem, a virtual ecosystem can also be adopted. The same applies to a reference ecosystem described below.

The information processing system 10 includes one or more terminals 11-i, one or more servers 12, and a database (DB) 13. The terminals 11-i, the servers 12, and the DB 13 can communicate with each other via a network 14 including a wired local area network (LAN), a wireless LAN, the Internet, a mobile communication network such as 5G, and the like. The network 14 may include a broadcast network.

In Fig. 1, four terminals 11-1, 11-2, 11-3, and 11-4 are provided as the terminals 11-i. However, the number of terminals 11-i may be set to one to three, or five or more. Hereinafter, the terminals 11-1, 11-2, 11-3, and 11-4 will each be referred to as a terminal 11 unless there is a particular need to distinguish among them.

In Fig. 1, one server 12 is provided as the servers 12, but a plurality of servers 12 may be provided. In the case where a plurality of servers 12 are provided, the plurality of servers 12 may be caused to perform the processing described below in a distributed manner. In addition, the terminals 11 which the servers 12 handle may be assigned, and each server 12 may be caused to perform processing only for the terminals 11 which that server 12 handles.

In addition, the information processing system 10 can cause the terminal 11 to perform some or all of the processing performed by the server 12. If the terminal 11 is to perform all the processing performed by the server 12, the information processing system 10 may be configured without the server 12.

The terminal 11 is, for example, a personal computer (PC) or the like, and is operated by a user. Alternatively, the terminal 11 may be a mobile terminal (device) or the like, such as a smartphone or smart glasses.

The user can operate the terminal 11 in a region (place) where the user lives, a region where the target ecosystem is located, or any other region, and input information observed in the target ecosystem and various other necessary information.

Examples of the information observed in the target ecosystem include biological species information, carbon information, the site area of the target ecosystem, and environmental information such as the weather or climate of the target ecosystem, including the temperature.

The biological species information is information about observed species, which are biological species observed in the target ecosystem, and examples thereof include images of the ecosystem, an observed species list describing the names of the biological species observed in the ecosystem, and the like. The carbon information is information about carbon in the ecosystem, and examples thereof include an amount of carbon stock in the target ecosystem, an amount of carbon released (reduced to the atmosphere) to create the target ecosystem, and the like.

The terminal 11 transmits to the server 12 (over the network 14) the biological species information, the carbon information, the site area of the target ecosystem, and other necessary information, which are input in response to user operations.

The terminal 11 receives, for example, an image as a presentation user interface (UI) that presents assessment results of the condition of the target ecosystem, index values of biodiversity, carbon stock, and carbon flow (respectively), and the like, which are transmitted from the server 12 (over the network 14). The terminal 11 presents the assessment results of the condition of the target ecosystem, and like to the user by, for example, displaying the presentation UI (or outputting it by voice).

The server 12 assesses the condition of the target ecosystem based on the biodiversity, carbon stock, and carbon flow of the target ecosystem.

For example, the server 12 receives the biological species information, the carbon information, the site area, and the like of the target ecosystem, which are transmitted from the terminals 11 (over the network 14). The server 12 calculates index values of the biodiversity, carbon stock, and carbon flow of the target ecosystem based on the biological species information, carbon information, site area, and the like of the target ecosystem from the terminals 11, and assesses the condition of the target ecosystem based on the index values.

The server 12 generates a presentation UI that presents the assessment results of the condition of the target ecosystem, and the like, and transmits the presentation UI to the terminals 11 (over the network 14).

The server 12 refers to the DB 13 (over the network 14) as necessary, and uses the information stored in the DB 13 to perform processing.

The DB 13 stores big data as various information. For example, the DB 13 includes an interaction DB, a vegetation DB, a climate DB, a soil DB, an ecosystem service DB, and the like.

The interaction DB stores, for each biological species, information on (inter-organism) interactions that occur with that biological species, and on other biological species with which interactions occur (hereinafter also referred to as interacting biological species), and the like.

The vegetation DB is a geographic information system (GIS)-based DB that stores information on vegetation growing in various places in association with location information (coordinates, etc.).

The climate DB is a GIS-based DB that stores information on the climate (meteorological phenomenon, weather) of various regions in association with location information.

The soil DB is a GIS-based DB that stores soil information for various regions in association with location information.

The ecosystem service DB stores, for each biological species, information on the ecosystem services to which that biological species contributes.

### <Hardware Configuration Example of Terminal 11 and Server 12>

Fig. 2 is a diagram illustrating a hardware configuration example of the terminal 11.

The terminal 11 includes a communication unit 21, a computation unit 22, an input/output unit 23, a storage 24, a positioning unit 25, and a sensor unit 26. The units from the communication unit 21 to the sensor unit 26 are connected to each other via a bus such that the units can exchange information.

The communication unit 21 functions as a transmission unit that transmits information and a reception unit that receives information over the network 14.

The computation unit 22 includes a processor such as a central processing unit (CPU) or a digital signal processor (DSP), and executes programs recorded in the storage 24 to perform various types of processing.

The input/output unit 23 includes a keyboard, a touch panel, a microphone, and the like, and receives operations and various other inputs from the user. The input/output unit 23 also includes a speaker and a display (display unit), and presents information to the user through output of sound, display of images, and the like.

The storage 24 is a semiconductor memory such as random access memory (RAM) and non-volatile memory, an SSD (solid state drive), an HDD (hard disk drive), and the like. In the storage 24, programs to be executed by the computation unit 22, data necessary for processing of the computation unit 22, and the like are recorded (stored).

The programs executed by the computation unit 22 may be installed on a computer serving as the terminal 11 from, for example, a removable recording medium such as a digital versatile disc (DVD) or a memory card. The programs can also be downloaded to a computer serving as the terminal 11 over the network 14 or the like, for example, and then installed in the storage 24.

The positioning unit 25 is implemented by a global positioning system (GPS), for example, and measures the location of (locations) the terminal 11 and outputs location information expressing that location, such as latitude and longitude (and the necessary altitude).

The sensor unit 26 includes various sensors, such as a camera, a distance measurement sensor, a temperature sensor, a humidity sensor, and the like, and performs various sensing operations, such as capture of images, detection of distance, detection of temperature, detection of humidity, and the like, and outputs the images, distance, temperature, humidity, and the like as sensing results.

Fig. 3 is a diagram illustrating a hardware configuration example of the server 12.

The server 12 includes a communication unit 31, a computation unit 32, an input/output unit 33, and a storage 34. The communication unit 31 through the storage 34 are configured similarly to the communication unit 21 through the storage 24 in Fig. 2, respectively, and therefore, description thereof will be omitted. The communication unit 31 through the storage 34 may have higher capacity, processing speed, and other performance than the communication unit 21 through the storage 24.

### <Functional Configuration Example of Server 12>

Fig. 4 is a block diagram illustrating a functional configuration example of the server 12.

The functional configuration of the server 12 is implemented functionally by the computation unit 32 in Fig. 3 executing a program.

In Fig. 4, the server 12 includes an acquisition unit 41, a calculation unit 42, an assessment unit 43, and a generation unit 44.

The acquisition unit 41 receives and thus acquires various types of information such as biological species information, carbon information, site area, and the like of the target ecosystem, which are transmitted from the terminal 11.

The acquisition unit 41 supplies the acquired information to a necessary block. For example, the acquisition unit 41 supplies the biological species information, carbon information, site area, and the like of the target ecosystem to the calculation unit 42.

The calculation unit 42 calculates index values of the biodiversity, carbon stock, and carbon flow of the target ecosystem based on the biological species information, carbon information, and site area, and the like from the acquisition unit 41, respectively, and supplies the index values to the assessment unit 43 and the generation unit 44.

The assessment unit 43 assesses the condition of the target ecosystem based on the index values of the biodiversity, carbon stock, and carbon flow of the target ecosystem (respectively) from the calculation unit 42, and supplies the assessment results to the generation unit 44.

The generation unit 44 generates a presentation UI that presents various types of information such as the index values of the biodiversity, carbon stock, and carbon flow of the target ecosystem from the calculation unit 42, and the assessment results of the condition of the target ecosystem from the assessment unit 43, and transmits the presentation UI to the terminal 11.

Fig. 5 is a flowchart illustrating an example of processing of the server 12 in Fig. 4.

In step S11, the acquisition unit 41 acquires biological species information, carbon information, site area, and the like of the target ecosystem from the terminal 11, and supplies them to the calculation unit 42, and then the processing proceeds to step S12.

In step S12, the calculation unit 42 calculates an index value of biodiversity of the target ecosystem based on the biological species information from the acquisition unit 41, and calculates index values of carbon stock and carbon flow of the target ecosystem based on the carbon information and site area from the acquisition unit 41. The calculation unit 42 supplies the index values of the biodiversity, carbon stock, and carbon flow of the target ecosystem to the assessment unit 43 and the generation unit 44, and then the processing proceeds from step S12 to step S13.

In step S13, the assessment unit 43 assesses the condition of the target ecosystem based on the index values of biodiversity, carbon stock, and carbon flow of the target ecosystem from the calculation unit 42, supplies the assessment results to the generation unit 44, and then the processing proceeds to step S14.

In step S14, the generation unit 44 generates a presentation UI that presents the index values of the biodiversity, carbon stock, and carbon flow of the target ecosystem from the calculation unit 42, the assessment results of the condition of the target ecosystem from the assessment unit 43, and the like, and transmits the presentation UI to the terminal 11, and then the processing ends.

Fig. 6 illustrates acquisition timings.

The acquisition timing is the timing at which the user acquires (inputs into the terminal 11) biological species information and carbon information of the target ecosystem. For example, (almost) periodic timing may be adopted as the acquisition timing. The period from one acquisition timing to the next acquisition timing (the period of the acquisition timing) is also called the acquisition span. The acquisition span may be, for example, one month or one year.

Here, the carbon information is, as described with reference to Fig. 1, for example, the amount of carbon stock of the target ecosystem, the amount of carbon released for creating the target ecosystem, and the like. The amount of carbon stock of the target ecosystem as carbon information means the amount of carbon currently fixed in the target ecosystem, such as carbon derived from aboveground and underground biomass of the target ecosystem, carbon derived from litter, soil carbon, and the like.

The amount of carbon derived from aboveground biomass can be acquired, for example, by harvesting biomass through felling and directly measuring carbon using a dry combustion method or a wet pyrolysis method. The amount of carbon derived from aboveground biomass can be acquired by an indirect measurement method used in tree-by-tree surveys. The indirect measurement method is a method in which a biomass amount of aboveground biomass is estimated using an allometry equation from measurements of a part of plant, such as stems, and an amount of carbon is calculated by applying a reference value for carbon content to the estimated biomass amount.

The amount of carbon derived from underground biomass can be calculated, for example, by obtaining (estimating) a biomass amount of aboveground biomass, estimating the biomass amount of underground biomass using the biomass amount of aboveground biomass and a reference value for the ratio of aboveground biomass to underground biomass, and applying the reference value for carbon content to the estimated biomass amount.

The amount of carbon derived from litter can be acquired, for example, in the same manner as the amount of carbon derived from the aboveground biomass.

The amount of soil carbon can be acquired by directly measuring carbon using a dry combustion method or a wet pyrolysis method.

### <Configuration Example of Calculation Unit 42>

Fig. 7 is a block diagram illustrating a configuration example of the calculation unit 42 in Fig. 4.

The calculation unit 42 includes a biodiversity index value calculation unit 51, a carbon stock index value calculation unit 52, and a carbon flow index value calculation unit 53.

The latest biological species information, the latest carbon information, and the site area of the target ecosystem are supplied from the acquisition unit 41 to the calculation unit 42. The latest biological species information and the latest carbon information are biological species information and carbon information acquired at the latest acquisition timing.

After transmitting the site area of the target ecosystem, the terminal 11 can skip transmitting the site area as long as the site area of the target ecosystem does not change. In this case, unless a new site area of the target ecosystem is transmitted from the terminal 11, the calculation unit 42 uses the site area transmitted immediately before.

The latest biological species information is supplied to the biodiversity index value calculation unit 51. The latest carbon information and the site area are supplied to the carbon stock index value calculation unit 52 and the carbon flow index value calculation unit 53.

The biodiversity index value calculation unit 51 calculates an index value of biodiversity of the target ecosystem based on the latest biological species information, and supplies the index value to the assessment unit 43 and the generation unit 44.

The carbon stock index value calculation unit 52 calculates an index value of carbon stock of the target ecosystem based on the latest carbon information and the site area, and supplies the index value to the assessment unit 43 and the generation unit 44.

The carbon flow index value calculation unit 53 calculates an index value of carbon flow of the target ecosystem based on the latest carbon information and the site area, and supplies the index value to the assessment unit 43 and the generation unit 44.

### <Configuration Example of Biodiversity Index Value Calculation Unit 51>

Fig. 8 is a block diagram illustrating a first configuration example of the biodiversity index value calculation unit 51 in Fig. 7.

In Fig. 8, the biodiversity index value calculation unit 51 includes a species number calculation unit 61.

The latest biological species information is supplied to the species number calculation unit 61. The species number calculation unit 61 calculates the number of observed species observed in the target ecosystem based on the latest biological species information as an index value of biodiversity of the target ecosystem.

Fig. 9 is a block diagram illustrating a second configuration example of the biodiversity index value calculation unit 51 in Fig. 7.

In the figure, the same reference numerals are given to parts corresponding to those in Fig. 8, and hereinafter, description thereof will not be repeated as appropriate.

In Fig. 9, the biodiversity index value calculation unit 51 includes the species number calculation unit 61, an interaction number calculation unit 71, and an index value calculation unit 72.

Therefore, the biodiversity index value calculation unit 51 in Fig. 9 is the same as that in Fig. 8 in respect of including the species number calculation unit 61, but differs from that in Fig. 8 in that the interaction number calculation unit 71 and the index value calculation unit 72 are additionally provided.

The latest biological species information is supplied to the interaction number calculation unit 71. The interaction number calculation unit 71 identifies observed species observed in the target ecosystem based on the latest biological species information. Then, the interaction number calculation unit 71 refers to the interaction DB of the DB 13, calculates the number of interactions occurring with the observed species (interaction number), and supplies that number of interactions to the index value calculation unit 72.

Here, the interaction DB stores information such as the presence or absence of (inter-organism) interactions previously observed for any pair of biological species, and the type of the interactions. Examples of the interactions include "prey/predator" relationships, ecological function relationships such as "pollinating/being pollinated", and co-occurrence relationships such as having been observed together in a particular ecosystem in the past.

To the index value calculation unit 72, the number of interactions is supplied from the interaction number calculation unit 71, and the number of observed species (number of biological species) is also supplied from the species number calculation unit 61.

The index value calculation unit 72 calculates an index value of biodiversity of the target ecosystem based on the number of observed species from the species number calculation unit 61 and the number of interactions from the interaction number calculation unit 71. For example, the index value calculation unit 72 calculates the product of the number of observed species and the number of interactions as the index value of biodiversity of the target ecosystem.

By calculating an index value of biodiversity based on the number of observed species and the number of interactions, it is possible to obtain an index value of biodiversity that more accurately indicates the complexity of the ecosystem network of the target ecosystem than the index value of biodiversity used as the number of observed species.

### <Configuration Example of Carbon Stock Index Value Calculation Unit 52>

Fig. 10 is a block diagram illustrating a configuration example of the carbon stock index value calculation unit 52 in Fig. 7.

The carbon stock index value calculation unit 52 includes a unit stock amount calculation unit 81.

An amount of carbon stock as the latest carbon information and the site area of the target ecosystem are supplied to the unit stock amount calculation unit 81.

The unit stock amount calculation unit 81 calculates an amount of carbon stock per unit area as an index value of carbon stock based on the amount of carbon stock and the site area of the target ecosystem. For example, when the unit area is 1 ha (hectare), the unit of the index value of carbon stock is Mg/ha.

### <Configuration Example of Carbon Flow Index Value Calculation Unit 53>

Fig. 11 is a block diagram illustrating a first configuration example of the carbon flow index value calculation unit 53 in Fig. 7.

The carbon flow index value calculation unit 53 includes a storage unit 91, a stock difference calculation unit 92, and a unit flow amount calculation unit 93.

An amount of carbon stock of the target ecosystem as the latest carbon information is supplied to the storage unit 91, and the storage unit 91 stores that amount of carbon stock.

The amount of carbon stock of the target ecosystem as the latest carbon information is supplied to the stock difference calculation unit 92.

The stock difference calculation unit 92 subtracts the amount of carbon stock of the target ecosystem as the latest carbon information acquired at the previous acquisition timing and stored in the storage unit 91 (hereinafter also referred to as the previous amount of carbon stock) from the amount of carbon stock of the target ecosystem as the latest carbon information. Thus, the stock difference calculation unit 92 calculates a stock difference, which is a difference between the amount of carbon stock of the target ecosystem acquired at the latest acquisition timing (hereinafter also referred to as the latest amount of carbon stock) and the previous amount of carbon stock. The stock difference calculation unit 92 supplies the stock difference to the unit flow amount calculation unit 93 as a carbon amount of the carbon flow of the target ecosystem (amount of carbon flow).

The stock difference is (approximately) equal to the amount of carbon that would have been fixed (absorbed) in the target ecosystem due to biomass growth (vegetation growth) during the acquisition span if no harvesting had taken place in the target ecosystem. Therefore, when the stock difference is defined as the amount of carbon flow, the carbon flow of the target ecosystem is the carbon newly fixed in the target ecosystem during the acquisition span.

The stock difference as the amount of carbon flow of the target ecosystem as well as the site area is supplied from the stock difference calculation unit 92 to the unit flow amount calculation unit 93.

The unit flow amount calculation unit 93 calculates an amount of carbon flow per unit area as an index value of carbon flow based on the amount of carbon flow and the site area of the target ecosystem. For example, when the unit area is 1 ha and the acquisition span is 1 year, the unit of the index value of carbon flow is Mg/ha/year.

Fig. 12 is a block diagram illustrating a second configuration example of the carbon flow index value calculation unit 53 in Fig. 7.

In Fig. 12, the elements corresponding to those in Fig. 11 are designated by the same characters and their description will not be repeated.

In Fig. 12, the carbon flow index value calculation unit 53 includes the storage unit 91 through the unit flow amount calculation unit 93, a fixed carbon amount calculation unit 112, and a carbon flow amount calculation unit 113.

Therefore, the carbon flow index value calculation unit 53 in Fig. 12 is the same as that in Fig. 11 in respect of including the storage unit 91 through the unit flow amount calculation unit 93. However, the carbon flow index value calculation unit 53 in Fig. 12 differs from that in Fig. 11 in that the fixed carbon amount calculation unit 112 and the carbon flow amount calculation unit 113 are additionally provided.

In Fig. 12, the (latest) carbon information to be supplied includes the amount of carbon stock of the target ecosystem, as well as an amount of carbon derived from harvested biomass (an amount of carbon returned to society by harvest) and an amount of carbon released for creation.

The amount of carbon derived from harvested biomass is supplied to the fixed carbon amount calculation unit 112, and the amount of carbon released for creation is supplied to the carbon flow amount calculation unit 113.

To the fixed carbon amount calculation unit 112, the amount of carbon derived from harvested biomass, as well as a stock difference between the latest amount of carbon stock and the previous amount of carbon stock are supplied from the stock difference calculation unit 92.

The fixed carbon amount calculation unit 112 calculates an amount of fixed carbon, which is an amount of carbon fixed (absorbed) in the target ecosystem during the latest acquisition span, based on the amount of carbon derived from harvested biomass and the stock difference, and supplies the amount of fixed carbon to the carbon flow amount calculation unit 113.

The amount of carbon derived from harvested biomass is an amount of carbon fixed in harvested crops (including removal by thinning, etc.) during the latest acquisition span in the target ecosystem.

For example, according to Synecoculture (registered trademark), harvesting occurs frequently. In harvested crops, carbon is fixed during the growth process, and the amount of fixed carbon is included in the amount of carbon stock before harvest.

However, after harvest, when the harvested crops are removed from the target ecosystem, the amount of carbon fixed in the harvested crops is no longer included in the amount of carbon stock of the target ecosystem, even though it is the amount of carbon fixed in the target ecosystem.

Therefore, the fixed carbon amount calculation unit 112 adds the amount of carbon derived from harvest biomass, which is the amount of carbon fixed in harvested crops during the latest acquisition span, to the stock difference between the latest amount of carbon stock and the previous amount of carbon stock, and calculates the addition value as the amount of fixed carbon fixed in the target ecosystem during the latest acquisition span. This makes it possible to calculate a highly accurate amount of fixed carbon, and therefore a highly accurate index value of carbon flow.

The carbon flow amount calculation unit 113 calculates an amount of carbon flow of the target ecosystem based on the amount of carbon released for creation and the amount of fixed carbon from the fixed carbon amount calculation unit 112, and supplies the amount of carbon flow to the unit flow amount calculation unit 93.

The amount of carbon released for creation is an amount of carbon released to create the target ecosystem during the acquisition span. An example of the amount of carbon released for creation is an amount of emitted carbon resulting from the manufacturing process of chemical fertilizers used in the target ecosystem during the acquisition span. In addition, examples of the amount of carbon released for creation include an amount of emitted carbon resulting from the manufacturing process of pesticides used in the target ecosystem during the acquisition span, and an amount of emitted carbon resulting from the manufacturing process and combustion of fuels consumed in the target ecosystem during the acquisition span. The amount of emitted carbon resulting from combustion of fuels is, for example, an amount of carbon released by the combustion of fuel consumed in automobiles or the like used for work in the target ecosystem.

The carbon flow amount calculation unit 113 calculates an amount of carbon flow of the target ecosystem by subtracting the amount of carbon released for creation from the amount of fixed carbon. This makes it possible to calculate a highly accurate amount of carbon flow, and therefore a highly accurate index value of carbon flow.

The unit flow amount calculation unit 93 calculates an amount of carbon flow per unit area as an index value of carbon flow, similarly to the case of Fig. 11, based on the site area and the amount of carbon flow from the carbon flow amount calculation unit 113.

### <Presentation UI>

Fig. 13 illustrates a first display example of a presentation UI.

Fig. 13 illustrates a display example of a presentation UI that presents index values of biodiversity, carbon stock, and carbon flow of target ecosystems, in particular, index values of carbon stock and carbon flow.

On the presentation UI in Fig. 13, an image is displayed in which in a two-dimensional coordinate system with (amount of) carbon flow on the horizontal axis and (amount of) carbon stock on the vertical axis as a condition space (plane) indicating the conditions of the target ecosystems, points representing the index values of carbon stock and carbon flow (hereinafter referred to as index points) are plotted in that condition space.

In Fig. 13, two ecosystems E1 and E2 are taken as the target ecosystems, and the index points of the two target ecosystems E1 and E2 are plotted in the condition space.

On the presentation UI, (an image of) the condition space in which the index points are plotted is displayed, so that the user can easily ascertain the balance between the carbon stock and carbon flow in the target ecosystems.

The condition space has a negative area where the carbon flow (index value) is negative and a positive area where the carbon flow is positive. The negative carbon flow means that the amount of carbon released is greater than the amount fixed (absorbed), and the positive carbon flow means that the amount of carbon fixed is greater than the amount released.

The user can easily ascertain the condition of carbon flow at a glance based on whether an index point is in the negative area or the positive area.

When an index point is located in the lower right of the positive area, as with the index point for the target ecosystem E1, the user can ascertain that the current carbon stock for the target ecosystem is low, but the carbon flow is positive. Furthermore, the user can ascertain that because the carbon flow is positive, an increase in the amount of fixed carbon derived from biomass and harvested crops growing in the target ecosystem can be expected in the future.

On the other hand, when an index point is located in the upper left of the negative area, as with the index point for the target ecosystem E2, the user can ascertain that the current carbon stock for the target ecosystem is rich, but the carbon flow is negative. Furthermore, the user can ascertain that because the carbon flow is negative, there is a possibility that the condition of the target ecosystem will tend to move in the future in a direction where carbon is released in excess of the carbon stock.

The presentation UI allows the index values themselves to be displayed along with the condition space in which the index values are plotted.

The presentation UI can also present index values of carbon stock and carbon flow as well as index values of biodiversity. In this case, the presentation UI allows the values themselves of biodiversity, carbon stock, and carbon flow index values to be displayed. Furthermore, the presentation UI allows an image to be displayed in which index points representing index points of biodiversity, carbon stock, and carbon flow are plotted in a three-dimensional space as a condition space with biodiversity, carbon stock, and carbon flow as the three axes.

### <Configuration Example of Assessment Unit 43>

Fig. 14 is a block diagram illustrating a first configuration example of the assessment unit 43 in Fig. 4.

In Fig. 14, the assessment unit 43 includes a biodiversity determination unit 121, a carbon stock determination unit 122, and a carbon flow determination unit 123.

An index value of biodiversity is supplied from the calculation unit 42 to the biodiversity determination unit 121. An index value of carbon stock is supplied from the calculation unit 42 to the carbon stock determination unit 122. An index value of carbon flow is supplied from the calculation unit 42 to the carbon flow determination unit 123.

The biodiversity determination unit 121 compares the index value of biodiversity of the target ecosystem from the calculation unit 42 with a threshold value to determine whether the biodiversity of the target ecosystem is high or low with respect to the threshold value, and outputs the biodiversity being high/low as one of the assessment results of the condition of the target ecosystem.

The carbon stock determination unit 122 compares the index value of carbon stock of the target ecosystem from the calculation unit 42 with a threshold value to determine whether the carbon stock of the target ecosystem is high or low with respect to the threshold value, and outputs the carbon stock being high/low as another of the assessment results of the condition of the target ecosystem.

The carbon flow determination unit 123 compares the index value of carbon flow of the target ecosystem from the calculation unit 42 with a threshold value to determine whether the carbon flow of the target ecosystem is high or low with respect to the threshold value, and outputs the carbon flow being high/low as yet another of the assessment results of the condition of the target ecosystem.

When the index value of biodiversity is equal to the threshold value, the assessment results can include an assessment result of the biodiversity being equal to the threshold value in addition to the biodiversity being high/low as an assessment result of the biodiversity being high or low. The same applies to the carbon stock and carbon flow.

The threshold values used by the assessment unit 43 can be set in advance as default values in the server 12. For example, the threshold value to be compared with the index value of carbon flow can be set to zero. In this case, if an assessment result indicates that the index value of carbon flow is equal to the threshold value, the user can ascertain that the condition of the target ecosystem is carbon neutral. If an assessment result indicates that the carbon flow is high, the user can ascertain that the condition of the target ecosystem is carbon negative (carbon absorption dominant). On the other hand, if an assessment result indicates that the carbon flow is low, the user can ascertain that the condition of the target ecosystem is carbon positive (carbon release dominant).

The threshold values used by the assessment unit 43 can also be set according to, for example, an operation of the terminal 11 by the user. For example, the user can input a threshold value according to the purpose into the terminal 11. For example, if the user wishes to compare the target ecosystem with an agricultural ecosystem in which a specified farming method such as conventional farming, general organic farming, or agroforestry is practiced, the user obtains index values of biodiversity, carbon stock, and carbon flow of the agricultural ecosystem in which the specified farming method is practiced, and inputs the index values as threshold values into the terminal 11. In this case, the threshold values are transmitted from the terminal 11 to the server 12 where it is set in the assessment unit 43.

Fig. 15 illustrates an example of assessment results of the condition of the target ecosystem.

In Fig. 15, when the index value of biodiversity is equal to the threshold value, the assessment results include an assessment result of the biodiversity being high or low. The same is true for carbon stock and carbon flow.

In Fig. 15, the assessment results for biodiversity, carbon stock, and carbon flow are each given as "high" or "low", and the assessment results of the condition of the target ecosystem will be one of the assessment results of eight patterns, Pattern 1 through Pattern 8, illustrated in Fig. 15.

On the presentation UI, the assessment results of the condition of the target ecosystem can be displayed side by side, for example, an assessment result of "high" or "low" for each of biodiversity, carbon stock, and carbon flow.

As the assessment results of the condition of the target ecosystem, one of the eight patterns in Fig. 15 is displayed, allowing the user to ascertain the balance of biodiversity, carbon stock, and carbon flow of the target ecosystem. For example, the user can ascertain which biodiversity, carbon stock, and carbon flow are below the threshold value and which are above the threshold value.

When the assessment results for Pattern 1 are presented, that is, the assessment results of biodiversity, carbon stock, and carbon flow are all "high", it is easy to ascertain that biodiversity, carbon stock, and carbon flow are all high in a balanced manner, and further, that the high biodiversity has resulted in (is likely to result in) a high ecosystem function for carbon fixation.

The assessment unit 43 in Figs. 14 and 15 compares each index value with one threshold value. However, the index value may be compared with two or more threshold values. For example, when an index value is compared with two threshold values TH1 and TH2 (> TH1), the assessment result may be output as "low" indicating that the index value is less than the threshold value TH1, "medium" indicating that the index value is equal to or greater than the threshold value TH1 and less than the threshold value TH2, or "high" indicating that the index value is equal to or greater than the threshold value TH2.

Fig. 16 is a block diagram illustrating a second configuration example of the assessment unit 43 in Fig. 4.

In Fig. 16, the assessment unit 43 includes a distribution estimation unit 131, a threshold value setting unit 132, and a determination unit 133.

To the assessment unit 43 in Fig. 16, index values of biodiversity, carbon stock, and carbon flow of a reference ecosystem, as well as the index values of the biodiversity, carbon stock, and carbon flow of the target ecosystem are supplied from the calculation unit 42.

The reference ecosystem is an ecosystem with which the target ecosystem is compared. An ecosystem located in a different place from the target ecosystem may be the reference ecosystem. An ecosystem in the same place as the target ecosystem but at a different time, for example, an ecosystem at a time in the past of the ecosystem that is currently the target ecosystem may be the reference ecosystem.

When an ecosystem at the same place as the target ecosystem but at a different time is the reference ecosystem, an ecosystem at the time when the user wishes to ascertain its condition is used as the target ecosystem, and an ecosystem at another time is used as the reference ecosystem. When an ecosystem at a time in the past is the target ecosystem, an ecosystem at a time in the future from the perspective of the target ecosystem, for example, the present ecosystem, may be the reference ecosystem.

For example, if Synecoculture (registered trademark) is being practiced in the target ecosystem, the reference ecosystem may be an agricultural ecosystem on farmland where a farming method other than Synecoculture (registered trademark), for example, a conventional farming method, is practiced, a natural ecosystem in the surrounding region of the target ecosystem, or the like. The reference ecosystem may be, for example, an ecosystem before Synecoculture (registered trademark) is practiced in the target ecosystem, an ecosystem at a specified time after the practice, or the like.

When an ecosystem in a different place from the target ecosystem is the reference ecosystem, the user can determine whether the ecosystem function for carbon fixation (carbon fixation capacity) and biodiversity of the target ecosystem are relatively higher or lower than those of the reference ecosystem.

When an ecosystem in the same place as the target ecosystem but at a different time is the reference ecosystem, the user can ascertain the condition of the target ecosystem, for example, the ecosystem function for carbon fixation and changes (trends) in biodiversity.

A plurality of ecosystems may be the reference ecosystem.

When a reference ecosystem is used, the user operates the terminal 11 to input biological species information, carbon information, site area, and other necessary information of one or more reference ecosystems in addition to the target ecosystem.

In this case, in the server 12, the calculation unit 42 calculates index values of biodiversity, carbon stock, and carbon flow for each of the target ecosystem and one or more reference ecosystems based on biological species information, carbon information, site area, and the like, and supplies the index values to the assessment unit 43.

In the assessment unit 43, index values of biodiversity, carbon stock, and carbon flow of the target ecosystem are supplied to the determination unit 133, and index values of biodiversity, carbon stock, and carbon flow of one or more reference ecosystems are supplied to the distribution estimation unit 131.

The distribution estimation unit 131 estimates, based on the index values of biodiversity of one or more reference ecosystems, the distribution of the index values of biodiversity of the reference ecosystems, and supplies the distribution to the threshold value setting unit 132.

For example, the distribution estimation unit 131 assumes a predetermined distribution, such as a normal distribution, as the distribution of the index values of biodiversity of the reference ecosystems, and calculates, as the distribution of the index values of biodiversity of the reference ecosystems, a normal distribution in which the average value of the index values of biodiversity of the one or more reference ecosystems is the average value of the normal distribution, and the variance of the index values of biodiversity of the one or more reference ecosystems is the variance of the normal distribution.

When there is only one reference ecosystem, the distribution estimation unit 131 can, for example, calculate, as the distribution of the index value of biodiversity of the reference ecosystem, a normal distribution in which the index value of biodiversity of the one reference ecosystem is the average value and a predetermined value is the variance. The predetermined value as the variance may be set by the user operating the terminal 11, for example. The server 12 can, for example, divide a plurality of ecosystems whose information has been made public into a plurality of groups, calculate the variance of the index values of biodiversity for each group, and set the average value of the variances and the like across all groups as the variance of the distribution of the index value of biodiversity of the reference ecosystem.

The distribution estimation unit 131 similarly estimates the distributions of the index values of carbon stock and carbon flow of the reference ecosystem (respectively), and supplies the distributions to the threshold value setting unit 132.

The threshold value setting unit 132 sets a threshold value (TH) for the index value of biodiversity based on the distribution of the index value of biodiversity of the reference ecosystem from the distribution estimation unit 131, and supplies the threshold value to the determination unit 133.

For example, the threshold value setting unit 132 can set the average value of the distribution of the index value of biodiversity of the reference ecosystem as the threshold value. For example, the threshold value setting unit 132 can sample an index value of biodiversity with a probability according to the distribution of the index value of biodiversity of the reference ecosystem and set the sampled index value as the threshold value. The sampling of an index value of biodiversity may be performed without setting a particular range, or can be performed by setting a specific range such as a 90% confidence section (confidence section with a confidence coefficient of 90%).

The threshold value setting unit 132 similarly sets threshold values for the index values of carbon stock and carbon flow, and supplies the threshold values to the determination unit 133.

The determination unit 133 compares the index value of biodiversity of the target ecosystem from the calculation unit 42 with the threshold value of the index value of biodiversity from the threshold value setting unit 132, thereby determining whether the biodiversity of the target ecosystem is high or low with respect to the threshold value. The determination unit 133 outputs (the determination result of) whether the biodiversity of the target ecosystem is high or low as an assessment result of the condition of the target ecosystem.

The determination unit 133 also determines whether those of carbon stock and carbon flow of the target ecosystem are high or low with respect to the respective threshold values, and outputs the results as assessment results of the condition of the target ecosystem.

In the same manner as the distribution of the index value of biodiversity (hereinafter also referred to as the biodiversity distribution) of the reference ecosystem, the assessment unit 43 can also estimate the biodiversity distribution of the target ecosystem. Then, by performing a statistical test based on the biodiversity distributions of the target ecosystem and the reference ecosystem, the biodiversity of the target ecosystem can be assessed (determined) as being high or low.

For example, it is possible to perform, using the distribution of the index values of biodiversity of the target ecosystem and the reference ecosystem, a one-sided test of whether the index value of biodiversity of the target ecosystem is greater than or less than the index value of biodiversity of the reference ecosystem. Then, the biodiversity of the target ecosystem can be assessed (determined) as being high or low depending on whether the value in the one-sided test is below a significance level.

The same applies to the carbon stock and carbon flow of the target ecosystem.

Fig. 17 illustrates an example of assessment results of the conditions of target ecosystems.

Fig. 17 illustrates an example of assessment results of the conditions of target ecosystems in the second configuration example of the assessment unit 43 in Fig. 16.

In Fig. 17, the index value of biodiversity for the target ecosystem E1 is greater than the threshold value TH, and the assessment result of the condition of the target ecosystem E1 is that the biodiversity is high.

On the other hand, the index value of biodiversity for the target ecosystem E2 is smaller than the threshold value TH, and the assessment result of the condition of the target ecosystem E2 is that the biodiversity is low.

On the presentation UI, as illustrated in Fig. 17, an image can be displayed in which the index values of the target ecosystems and a threshold value are plotted on an axis for each of the biodiversity, carbon stock, and carbon flow, as assessment results of the conditions of the target ecosystems.

By seeing the relationship between each index value of biodiversity, carbon stock, and carbon flow of the target ecosystem and the corresponding threshold, the user can easily ascertain the condition of the target ecosystem compared with the reference ecosystem, for example, the degree of improvement (decrease) in biodiversity, carbon stock, and carbon flow.

Fig. 18 is a block diagram illustrating a third configuration example of the assessment unit 43 in Fig. 4.

In Fig. 18, the elements corresponding to those in Fig. 16 are designated by the same characters and their description will not be repeated.

In Fig. 18, the assessment unit 43 includes the distribution estimation unit 131 through the determination unit 133 and a candidate specification unit 141.

Therefore, the assessment unit 43 in Fig. 18 is the same as that in Fig. 16 in respect of including the distribution estimation unit 131 through the determination unit 133, but differs from that in Fig. 16 in that the candidate specification unit 141 is additionally provided.

For example, in order to ascertain whether the practice of Synecoculture (registered trademark) has improved the ecosystem function for carbon fixation of the target ecosystem, it may be required to use as a reference ecosystem an ecosystem in which vegetation similar to that which can grow in the target ecosystem grows and which has an environment similar to that of the target ecosystem. However, it is difficult for the user to find such an ecosystem in the real world.

Therefore, the candidate specification unit 141 specifies as a candidate for the reference ecosystem an ecosystem in which vegetation similar to that which can grow in the target ecosystem grows and which has an environment similar to that of the target ecosystem, and provides information on the candidate to the user.

The user operates the terminal 11 to input location information indicating the location of the target ecosystem, climate information regarding the climate, and soil information regarding the soil such as soil quality. The terminal 11 transmits to the server 12 the location information, climate information, and soil information of the target ecosystem, which are input by the user. The server 12 receives the location information, climate information, and soil information of the target ecosystem from the terminal 11, and supplies them to the candidate specification unit 141.

The candidate specification unit 141 refers to the vegetation DB of the DB 13, to acquire information on vegetation that can grow in the location indicated by the location information of the target ecosystem.

Meanwhile, the candidate specification unit 141 can refer to the climate DB of the DB 13 to acquire climate information for the location indicated by the location information of the target ecosystem. In this case, the transmission of the climate information from the terminal 11 to the server 12 may be skipped.

The candidate specification unit 141 uses the information on vegetation that can grow in the location indicated by the location information of the target ecosystem, as well as the climate information and soil information of the target ecosystem from the terminal 11, to create multivariate data for the target ecosystem.

Furthermore, the candidate specification unit 141 uses information on vegetation stored in the vegetation DB of the DB 13, climate information stored in the climate DB of the DB 13, and soil information stored in the soil DB of the DB 13 to create multivariate data for each location that corresponds to the multivariate data for the target ecosystem.

Then, the candidate specification unit 141 calculates a similarity between the multivariate data for each location and the multivariate data for the target ecosystem, and specifies (selects) locations whose similarity is greater than or equal to a predetermined value, or locations whose similarity is in the top N (> 1), as candidates for the reference ecosystem.

The candidate specification unit 141 transmits location information of the places as candidates for the reference ecosystem to the terminal 11 to cause it to be displayed.

The user can determine a place to be adopted as a reference ecosystem from among the locations as candidates for the reference ecosystem, the location information of which is displayed on the terminal 11 in the above manner. Then, the user acquires biological species information, carbon information, site area, and the like from the location determined as the reference ecosystem.

Fig. 19 is a block diagram illustrating a fourth configuration example of the assessment unit 43 in Fig. 4.

In Fig. 19, the assessment unit 43 includes a distribution estimation unit 151, a threshold value setting unit 152, and a determination unit 153.

As in the case of Fig. 16, to the assessment unit 43 in Fig. 19, index values of biodiversity, carbon stock, and carbon flow of a reference ecosystem, as well as the index values of the biodiversity, carbon stock, and carbon flow of the target ecosystem are supplied from the calculation unit 42.

However, in the case of Fig. 16, for the reference ecosystem, index values of biodiversity, carbon stock, and carbon flow of one or more reference ecosystems are supplied to the assessment unit 43. In the case of Fig. 19, index values of biodiversity, carbon stock, and carbon flow of a plurality of reference ecosystems are supplied to the assessment unit 43.

Here, for example, index values of biodiversity, carbon stock, and carbon flow of N (> 1) reference ecosystems are supplied to the assessment unit 43.

In the assessment unit 43, the index values of biodiversity, carbon stock, and carbon flow of each target ecosystem are supplied to the determination unit 153, and the index values of biodiversity, carbon stock, and carbon flow of the N reference ecosystems are supplied to the distribution estimation unit 151.

For each of the N reference ecosystems, the distribution estimation unit 151 estimates, based on the index values of biodiversity of the reference ecosystem, the distribution of the index values of biodiversity of the reference ecosystem in the same manner as the distribution estimation unit 131 in Fig. 16, and supplies the distribution to the threshold value setting unit 152.

The distribution estimation unit 151 similarly estimates the distribution of the index values of carbon stock and carbon flow for each of the N reference ecosystems, and supplies the resulting distributions to the threshold value setting unit 152.

For each of the N reference ecosystems, the threshold value setting unit 152 sets, based on the distribution of the index values of biodiversity of the reference ecosystem from the distribution estimation unit 151, a threshold value TH for the index value of biodiversity in the same manner as the threshold value setting unit 132 in Fig. 16, and supplies the threshold value TH to the determination unit 153.

Specifically, the threshold value setting unit 152 sets, based on the distribution of the index value of biodiversity of the n(= 1, 2, ..., N)th reference ecosystem, a threshold value TH(n) for the index value of biodiversity in the same manner as the threshold value setting unit 132 in Fig. 16, thereby setting N threshold values TH(1), TH(2), ..., TH(N) as a plurality of threshold values.

The threshold value setting unit 152 similarly sets threshold values for the index values of carbon stock and carbon flow, and supplies the threshold values to the determination unit 153.

Here, the threshold value TH(n) set based on the distribution of the index value of each of the biodiversity and others of the nth reference ecosystem is also referred to as the threshold value based on the nth reference ecosystem.

The determination unit 153 compares the index value of biodiversity of the target ecosystem from the calculation unit 42 with each of the N threshold values TH(1) to TH(N) for the index values of biodiversity from the threshold value setting unit 152. Thus, the determination unit 153 determines whether the biodiversity of the target ecosystem is high or low with respect to each of the N threshold values TH(1) to TH(N), and outputs the biodiversity being high/low as an assessment result of the condition of the target ecosystem.

The determination unit 153 also determines whether those of carbon stock and carbon flow of the target ecosystem are high or low with respect to the respective N threshold values, and outputs the results as assessment results of the condition of the target ecosystem.

Fig. 20 illustrates an example of an assessment result of the condition of a target ecosystem.

Fig. 20 illustrates an example of an assessment result of the condition of the target ecosystem in the fourth configuration example of the assessment unit 43 in Fig. 19.

In Fig. 20, three reference ecosystems RE1, RE2, and RE3 are used. Furthermore, the magnitude relationship between the threshold values TH(1), TH(2), and TH(3) based on the reference ecosystems RE1 to RE3, respectively, is TH(1) < TH(2) < TH(3).

Further, in Fig. 20, the index value of carbon stock of the target ecosystem is greater than the threshold values TH(1) and TH(2), but less than TH(3). Therefore, an assessment result of the condition of the target ecosystem is that the carbon stock is higher than those of the reference ecosystems RE1 and RE2, but lower than that of the reference ecosystem RE3.

On the presentation UI, as illustrated in Fig. 20, an image can be displayed in which an index value of the target ecosystem and the threshold value based on each reference ecosystem are plotted on an axis for each of the biodiversity, carbon stock, and carbon flow, as an assessment result of the condition of the target ecosystem.

By seeing the relationship (difference, etc.) between each index value of biodiversity, carbon stock, and carbon flow of the target ecosystem and the threshold value based on each reference ecosystem, the user can easily ascertain the degree of improvement in biodiversity, carbon stock, and carbon flow of the target ecosystem compared with the reference ecosystem.

In the fourth configuration example of the assessment unit 43, the plurality of reference ecosystems may be ecosystems that are in a different condition from the target ecosystem, for example, ecosystems that are under different ecosystem management. Furthermore, the plurality of reference ecosystems may be ecosystems in different conditions from each other.

Specifically, for example, if the target ecosystem is an ecosystem where Synecoculture (registered trademark) is practiced, the plurality of reference ecosystems may include an agricultural ecosystem where a conventional farming method is practiced, an agricultural ecosystem where an organic farming method is practiced, and natural ecosystems in significantly different conditions, such as a natural ecosystem that has been abandoned for 20 years (natural forest, etc.), a natural ecosystem that has been abandoned for 400 years, and vacant land where no vegetation has grown.

In this case, by comparing the target ecosystem with the plurality of reference ecosystems in different conditions, the user can ascertain how high the target ecosystem is in terms of the level of biodiversity and the level of ecosystem function for carbon fixation (carbon fixation capacity) from the perspective of carbon stock and carbon flow.

For example, in Fig. 20, if the reference ecosystems RE1 and RE2 are a natural ecosystem (forest) and an agricultural ecosystem, respectively, the threshold value TH(2) based on the reference ecosystem RE2 is greater than the threshold value TH(1) based on the reference ecosystem RE1, and therefore, it can be seen that the carbon stock (capacity) of the agricultural ecosystem as the reference ecosystem RE2 is higher than the carbon stock of the natural ecosystem as the reference ecosystem RE1.

Furthermore, it can be seen that the carbon stock of the target ecosystem is somewhat higher when compared with the carbon stock of the agricultural ecosystem as the reference ecosystem RE2, and is significantly higher when compared with the carbon stock of the natural ecosystem as the reference ecosystem RE1.

In addition, the user can ascertain which stage of the reference ecosystem the condition of the target ecosystem is closest to when compared with the plurality of reference ecosystems.

Fig. 21 is a block diagram illustrating a fifth configuration example of the assessment unit 43 in Fig. 4.

Fig. 21 illustrates a configuration example of the assessment unit 43 when outputting, as an assessment result of the condition of the target ecosystem, information including the time when an accumulated value of the carbon flow of the target ecosystem becomes equal to or greater than the amount of carbon stock of the reference ecosystem (time of stock excess).

The time of stock excess indicates a period from the start time of the acquisition of carbon information and so on in the target ecosystem until the amount of carbon fixed in the target ecosystem becomes (almost) equal to the amount of carbon stock in the reference ecosystem. Therefore, the shorter (earlier) the time of stock excess, the higher the ecosystem function for carbon fixation in the target ecosystem.

Here, in Fig. 21, in addition to the time of stock excess, the assessment results of the condition of the target ecosystem to be output may include whether the biodiversity, carbon stock, and carbon flow is high or low, similar to the case of Fig. 16 and others. Alternatively, in Fig. 16 and others, instead of outputting whether the carbon flow is high or low, the time of stock excess may be output. In Fig. 21, the parts for obtaining whether the biodiversity, carbon stock, and carbon flow is high or low are omitted.

in Fig. 21, the assessment unit 43 includes a carbon flow prediction unit 161, an accumulation unit 162, a carbon stock prediction unit 163, and a determination unit 164.

The index values of carbon flow of the target ecosystem and the reference ecosystem are supplied from the calculation unit 42 to the carbon flow prediction unit 161.

For each of the target ecosystem and the reference ecosystem(s), the carbon flow prediction unit 161 calculates, based on index values of carbon flow in a time series - for example, if the acquisition span is one year, index values of carbon flow of two years or more -, a predicted value of the index value of carbon flow (hereinafter also referred to as the carbon flow predicted value) at each of acquisition timings including acquisition timings in the respective acquisition spans in the future from the start time of the acquisition of carbon information. The carbon flow predicted value may be calculated, for example, by calculating the rate of change of the index value of carbon flow from a time series of index values of carbon flow, and using this rate of change.

For the acquisition timing at which an index value of carbon flow has already been calculated, that index value can be used as is as the carbon flow predicted value.

The carbon flow prediction unit 161 supplies the carbon flow predicted values at their respective acquisition timings of each of the target ecosystem and the reference ecosystem(s) to the accumulation unit 162, and supplies the carbon flow predicted values at their respective acquisition timings of the reference ecosystem(s) to the generation unit 44.

The accumulation unit 162 accumulates the carbon flow predicted values at each acquisition timing of the target ecosystem from the carbon flow prediction unit 161. Thus, the accumulation unit 162 calculates an accumulated value of the carbon flow predicted values (hereinafter also referred to as the accumulated carbon flow predicted value) at each acquisition timing from the start time of the acquisition of carbon information.

Similarly, the accumulation unit 162 accumulates the carbon flow predicted values at each acquisition timing of the reference ecosystem from the carbon flow prediction unit 161, for each acquisition timing, to calculate an accumulated carbon flow predicted value at each acquisition timing.

The accumulation unit 162 supplies the accumulated carbon flow predicted value at each acquisition timing of the reference ecosystem to the carbon stock prediction unit 163, and supplies the accumulated carbon flow predicted value at each acquisition timing of the target ecosystem to the determination unit 164.

To the carbon stock prediction unit 163, the accumulated carbon flow predicted value at each acquisition timing of the reference ecosystem is supplied from the accumulation unit 162, and the index value of carbon stock of the reference ecosystem is also supplied from the calculation unit 42.

The carbon stock prediction unit 163 calculates, based on the accumulated carbon flow predicted value at each acquisition timing of the reference ecosystem and the index value of carbon stock of the reference ecosystem, a predicted value of the index value of carbon stock (hereinafter also referred to as the carbon stock predicted value) at each acquisition timing of the reference ecosystem, and supplies the predicted value to the determination unit 164. Specifically, the carbon stock prediction unit 163 adds, to the index value of carbon stock of the reference ecosystem (e.g., the latest index value of carbon stock), the accumulated carbon flow predicted value at each acquisition timing of the reference ecosystem after the acquisition timing of that index value calculated. Thus, the carbon stock prediction unit 163 calculates the carbon stock predicted value at each acquisition timing of the reference ecosystem.

For the acquisition timing at which an index value of carbon stock of the reference ecosystem has been calculated, that index value can be used as it is as the carbon stock predicted value.

The determination unit 164 aligns the time axes and compares, for each acquisition timing, the accumulated carbon flow predicted value at the acquisition timing of the target ecosystem from the accumulation unit 162 with the carbon stock predicted value at the acquisition timing of the reference ecosystem from the carbon stock prediction object 163. Thus, the determination unit 164 determines an acquisition timing at which the accumulated carbon flow predicted value of the target ecosystem will be equal to or greater than the carbon stock predicted value of the reference ecosystem. Then, the determination unit 164 determines, as the time of stock excess, the earliest acquisition timing at which the accumulated carbon flow predicted value of the target ecosystem will be equal to or greater than the carbon stock predicted value of the reference ecosystem. The determination unit 164 outputs, as assessment results of the condition of the target ecosystem, the time of stock excess, as well as the accumulated carbon flow predicted value at each acquisition timing of the target ecosystem, and the carbon stock predicted value at each acquisition timing of the reference ecosystem.

If the reference ecosystem is an agricultural ecosystem for which a local government or other entity can provide information regarding carbon flow and carbon stock, an ecosystem in which natural vegetation grows, or the like, the assessment unit 43 can use the information regarding carbon flow and carbon stock to calculate the carbon flow predicted value and carbon stock predicted value of the reference ecosystem.

### <Presentation UI>

Fig. 22 illustrates a second display example of a presentation UI.

Fig. 22 illustrates a display example of a presentation UI that presents assessment results of the condition of the target ecosystem output by the fifth configuration example of the assessment unit 43 in Fig. 21.

On the presentation UI in Fig. 22, displayed are the time of stock excess as an assessment result of the condition of the target ecosystem, the accumulated carbon flow predicted value of the target ecosystem, and the carbon stock predicted value of the reference ecosystem in a two-dimensional coordinate system with time on the horizontal axis and amount of carbon on the vertical axis. The user can easily ascertain the time of stock excess.

In Fig. 22, a dashed line indicates an addition value obtained by adding the carbon stock predicted value of the reference ecosystem to the carbon flow predicted value of the reference ecosystem, and that value at a certain acquisition timing matches the carbon stock predicted value at the next acquisition timing.

Fig. 23 illustrates a third display example of a presentation UI.

Fig. 23 illustrates a display example of a presentation UI that presents index values of biodiversity, carbon stock, and carbon flow of target ecosystems, as well as whether the biodiversity, carbon stock, and carbon flow of the target ecosystem are high or low as assessment results of the conditions of the target ecosystems.

On the presentation UI in Fig. 23, the index values of biodiversity, carbon stock, and carbon flow for each of three target ecosystems E1, E2, and E3 are displayed in the form of bar graphs. Furthermore, whether the biodiversity, carbon stock, and carbon flow of the target ecosystem are high or low as assessment results of the condition of the target ecosystem are displayed in the form of bar graphs with threshold values added.

According to the presentation UI in Fig. 23, for each of the three target ecosystems E1 to E3, the user can easily ascertain whether the biodiversity, carbon stock, and carbon flow as the condition of the target ecosystem are high or low. Furthermore, the user can easily ascertain how the biodiversity, carbon stock, and carbon flow are balanced.

On the presentation UI in Fig. 23, a management message such as suggestion and warning regarding the future management for each target ecosystem is further displayed. The management message is a message based on whether the biodiversity, carbon stock, and carbon flow of the target ecosystem as assessment results of the condition of the target ecosystem are high or low, the index values of biodiversity, carbon stock, and carbon flow, and the like. The generation unit 44 can generate a management message based on whether the biodiversity, carbon stock, and carbon flow of the target ecosystem as assessment results of the condition of the target ecosystem are high or low, the index values of biodiversity, carbon stock, and carbon flow, and the like. In addition, the generation unit 44 can generate a management message based on, for example, a difference between the latest assessment results of the condition of the target ecosystem and the previous assessment results.

For example, the generation unit 44 stores a message table in which whether the biodiversity, carbon stock, and carbon flow as the assessment results of the condition of the target ecosystem are high or low are associated with management messages. For example, if the assessment results of the condition of the target ecosystem indicate that the biodiversity and the carbon stock are "high" and the carbon flow is "low" as in Pattern 3 in Fig. 15, the target ecosystem has high biodiversity and carbon stock, and therefore, like an abandoned forest, its ecosystem function appears to be high, but because the carbon flow is low, its ecosystem function for carbon fixation is in decline. In this case, it is appropriate to make the carbon flow of the target ecosystem high. Therefore, in the message table, for example, the assessment results of Pattern 3 in Fig. 15 are associated with a management message suggesting to make the carbon flow high.

The generation unit 44 generates a management message by selecting a management message in the message table that corresponds to whether the biodiversity, carbon stock, and carbon flow as the assessment results of the condition of the target ecosystem are high or low, and includes the management message in the presentation UI.

In Fig. 23, the assessment results of the condition of the target ecosystem E1 indicate that the biodiversity is "low", the carbon flow is "low", and the carbon stock is "high". In addition, as a management message generated based on the assessment results, a message suggesting to make the biodiversity and carbon flow high is displayed: "Enhance disturbance (harvesting) and species introduction to increase the biodiversity and carbon flow."

The assessment results of the condition of the target ecosystem E2 indicate that the biodiversity is "high", the carbon flow is "high", and the carbon stock is "low". In addition, as a management message generated based on the assessment results, a message suggesting to make the carbon stock high is displayed: "Maintain or limit the level of disturbance (harvesting) to increase the stock."

The assessment results of the condition of the target ecosystem E3 indicate that the biodiversity, carbon flow, and carbon stock are all "high". In addition, as a management message generated based on the assessment results, a management message suggesting to maintain the level: "Continue and monitor the current management."

By referring to the presentation UI in Fig. 23 that is displayed each time carbon information or the like is acquired, the user can monitor the condition (quality) of the target ecosystem. The user can also refer to the management message to manage the target ecosystem.

Fig. 24 illustrates a fourth display example of a presentation UI.

Fig. 24 illustrates a display example of a presentation UI that presents index values of biodiversity, carbon stock, and carbon flow of a target ecosystem.

On the presentation UI in Fig. 24, the index values of biodiversity, carbon stock, and carbon flow of one target ecosystem are displayed in the form of bar graphs. In Fig. 24, the acquisition span is one month, and the index values of biodiversity, carbon stock, and carbon flow at each of the acquisition timings of April, May, and June are displayed.

Furthermore, on the presentation UI in Fig. 24, the frequency of disturbance (harvesting) and the frequency of species introduction in each of the months of April, May, and June, which are acquisition timings, are also displayed in the form of bar graphs as management information regarding the management of the target ecosystem. The management information such as the frequency of disturbance and the frequency of species introduction is input by the user to the terminal 11, and transmitted from the terminal 11 to the server 12.

The generation unit 44 can analyze, based on the management information and trends in the index values of the biodiversity, carbon stock, and carbon flow of the target ecosystem, the trends, and generate an analysis result message indicating the analysis result. Furthermore, the generation unit 44 can generate, based on the management information and the analysis result of trends in the index values of biodiversity, carbon stock, and carbon flow of the target ecosystem, a management message such as suggestion and warning regarding the future management for the target ecosystem.

In Fig. 24, an analysis result message is displayed: "The frequency of disturbance has decreased since April, so the assessment of biodiversity is not increasing in proportion to the frequency of species introduction. In addition, although the carbon stock associated with plant growth is increasing, the yield has decreased, so the carbon flow is also decreasing." Furthermore, a management message (suggestion) is displayed: "Increase the frequency of disturbance."

### <Configuration Example of Biodiversity Index Value Calculation Unit 51>

Fig. 25 is a block diagram illustrating a third configuration example of the biodiversity index value calculation unit 51 in Fig. 7.

In Fig. 25, the biodiversity index value calculation unit 51 includes an interacting biological species detection unit 181 and a contributing service detection unit 182, and calculates an index value of biodiversity based on the number of observed species observed in the target ecosystem that contribute to ecosystem services.

The latest species information is supplied to the interacting biological species detection unit 181. The interacting biological species detection unit 181 specifies observed species observed in the target ecosystem based on the latest species information. The interacting biological species detection unit 181 refers to the interaction DB of the DB 13 and detects other species (interacting biological species) that interact with the observed species. The interacting biological species detection unit 181 generates an interacting biological species list that describes the observed species and mutual work biological species, and supplies the interacting biological species list to the contributing service detection unit 182. Hereinafter, the observed species and mutual work biological species described in the interacting biological species list are also referred to as listed biological species.

The contributing service detection unit 182 refers to the ecosystem service DB of the DB 13 and detects whether or not the listed biological species described in the interacting biological species list from the interacting biological species detection unit 181 contribute to each ecosystem service. Then, based on the detection result, the contributing service detection unit 812 counts, for each ecosystem service, the number of listed biological species that contribute to the ecosystem service, and outputs the number of species as an index value of biodiversity.

The assessment of biodiversity using ecosystem services is described in the literature regarding ecosystem service providers: Funabashi, Masatoshi, and Tomoyuki Minami. "Dynamical assessment of aboveground and underground biodiversity with supportive AI." Measurement: Sensors 18 (2021): 100167.

Fig. 26 illustrates an example of an observed species list as the latest biological species information supplied to the interacting biological species detection unit 181 in Fig. 25.

In the observed species list as the latest biological species information in Fig. 25, three biological species, L1, L2, and L3, are described as observed species observed in the target ecosystem.

Fig. 27 illustrates an example of the interaction DB of the DB 13.

In the interaction DB in Fig. 27, a biological species is associated with an interacting biological species that interacts with (has an interaction with) the biological species. Although not illustrated, the interaction DB can also store (information on) interactions that occur between a biological species and an interacting biological species in association with the biological species and the interacting biological species.

In Fig. 27, as interacting biological species for the biological species L1 (species that interact with the biological species L1), biological species L4 and L5 are associated with the biological species L1. As an interacting biological species for the biological species L2, a biological species L6 is associated with the biological species L2. Furthermore, as an interacting biological species for a biological species L#m, a biological species L#m+1 is associated with the biological species L#m.

Fig. 28 illustrates an example of an interacting biological species list generated by the interacting biological species detection unit 181 in Fig. 25.

In the interacting biological species list in Fig. 28, the biological species L1 to L3 as observed species described in the observed species list in Fig. 26 are described as listed biological species. Furthermore, the biological species L4 and L5, which are interacting biological species for the biological species L1, are described as listed biological species. Furthermore, the biological species L6, which is an interacting biological species for the biological species L2, and a biological species L7, which is an interacting biological species for the biological species L3, are described as listed biological species.

Fig. 29 illustrates an example of the ecosystem service DB of the DB 13.

In the ecosystem service DB in Fig. 29, for each biological species, information (TRUE/FALSE) on whether the biological species contributes to each ecosystem service ES1, ES2, and so on is stored.

According to Fig. 29, the biological species L1 contributes to the ecosystem service ES1 and also contributes to the ecosystem service ES2. The biological species L2 contributes to the ecosystem service ES1 but not to the ecosystem service ES2.

Fig. 30 illustrates an example of processing of the contributing service detection unit 182 in Fig. 25.

The contributing service detection unit 182 refers to the ecosystem service DB in Fig. 29 and detects whether or not the listed biological species (observed species and interacting biological species) described in the interacting biological species list in Fig. 28 contribute to each ecosystem service. Then, the contributing service detection unit 812 counts, for each ecosystem service, the number of listed biological species that contribute to the ecosystem service.

Fig. 30 illustrates whether or not (TRUE/FALSE) each of the biological species L1 to L7, which are listed as biological species in the interacting biological species list, contributes to each of the ecosystem services ES1, ES2, and so on.

The contributing service detection unit 182 counts, for each ecosystem service ES1, ES2, and so on, the number of listed biological species ("TRUE" biological species) that contribute to the ecosystem service among the listed biological species L1 to L7 described in the interacting biological species list. Then, the contributing service detection unit 182 outputs the number of listed biological species (observed species and interacting biological species) that contribute to the ecosystem service as an index value of biodiversity. The contributing service detection unit 182 can output only the number of observed species that contribute to ecosystem services or only the number of interacting biological species as an index value of biodiversity.

### <Presentation UI>

Fig. 31 illustrates a fifth display example of a presentation UI.

Fig. 31 illustrates a display example of a presentation UI that presents, for each ecosystem service, the number of listed biological species (hereinafter also referred to as the number of contributing species) that contribute to the ecosystem service as an index value of biodiversity calculated by the biodiversity index value calculation unit 51 in Fig. 25.

In Fig. 31, for each of the three ecosystems - the ecosystems E1 and E2, which are target ecosystems, and the ecosystem E3, which is a reference ecosystem -, the number of contributing species for each of the four ecosystem services - provisioning services, regulating and conservation services, cultural services, and supporting services - is calculated as an index value of biodiversity.

On the presentation UI, for each of the three ecosystems - the target ecosystems E1 and E2 and the reference ecosystem E3 -, the number of contributing species for each of the four ecosystem services - provisioning services, regulating and conservation services, cultural services, and supporting services - is displayed in the form of table and the form of bar graphs.

Fig. 32 illustrates a sixth display example of a presentation UI.

The assessment unit 43 can output, for example, based on the index values of biodiversity and others of each of the target ecosystem and the reference ecosystem, relative values of the index values of biodiversity and others of the target ecosystem with respect to the index values of biodiversity and others of the reference ecosystem, as assessment results of the condition of the target ecosystem.

Fig. 32 illustrates a display example of a presentation UI that presents assessment results of the conditions of such target ecosystems.

In Fig. 32, similarly to the case of Fig. 31, for each of the three ecosystems - the ecosystems E1 and E2, which are target ecosystems, and the ecosystem E3, which is a reference ecosystem -, the number of contributing species for each of the four ecosystem services - provisioning services, regulating and conservation services, cultural services, and supporting services - is calculated as an index value of biodiversity.

Furthermore, in Fig. 32, for each of the target ecosystems E1 and E2, the number of contributing species, which is an index value of biodiversity of the target ecosystem, is divided by the number of contributing species, which is an index value of biodiversity of the reference ecosystem E3, and the resulting relative value of the number of contributing species for each of the four ecosystem services - provisioning services, regulating/conservation services, cultural services, and supporting services - is output as an assessment result of the condition of the target ecosystem.

On the presentation UI, for each of the target ecosystems E1 and E2, the relative value of the number of contributing species for each of the four ecosystem services - provisioning services, regulating and conservation services, cultural services, and supporting services - is displayed in the form of table and the form of radar charts as an assessment result of the condition of the target ecosystem.

According to the presentation UI in Fig. 32, the user can easily ascertain how the number of contributing species of the target ecosystem is compared with the number of contributing species of the reference ecosystem. For example, by referring to the relative values in the form of table or the radar charts, it is easy to ascertain which ecosystem services in each target ecosystem have more or fewer contributing species than those in the reference ecosystem.

Fig. 33 illustrates a seventh display example of a presentation UI.

Fig. 33 illustrates a display example of a presentation UI that presents index values of carbon stock and carbon flow of each of the target ecosystems and the reference ecosystem.

On the presentation UI in Fig. 33, an ecosystem E1 is a target ecosystem, and ecosystems E2 and E3 are reference ecosystems, and the index values of carbon stock and carbon flow of each of the target ecosystem E1 and the reference ecosystems E2 and E3 are displayed in the form of bar graphs (rectangles of different heights).

The index value of carbon flow displayed herein includes a carbon balance per unit area for an acquisition span of one year (annual balance) and an expected growth of carbon flow over the next 10 years. The expected growth of carbon flow over the next 10 years is predicted in the generation unit 44 from the annual balance and others.

The annual balance is displayed separately as the amount of fixed carbon (receipts) and the amount of emitted carbon (expenses). The amount of fixed carbon is displayed as an unsigned number, the amount of emitted carbon is displayed as a negative signed number. The amount of fixed carbon and the amount of emitted carbon may be displayed in different ways, for example, using different colors. For example, the amount of fixed carbon may be displayed in blue and the amount of emitted carbon in red.

Here, in Fig. 33, the fields where the annual balance is zero do not mean that the amount of fixed carbon and the amount of emitted carbon are completely zero, but rather that they can be considered to be zero to a certain extent roughly (macroscopically).

The index value of carbon stock displayed herein is an amount of carbon stock per unit area in each of trees and herbs, contained in the aboveground biomass and underground biomass. The amount of carbon stock per unit area in trees in the reference ecosystem E2 is 0 because there are no trees growing in the reference ecosystem E2.

By displaying the amount of carbon stock per unit area in each of trees and herbs as an index value of carbon stock, the user can easily ascertain the extent to which each of the trees and herbs contributes to the carbon stock.

Fig. 34 illustrates an eighth display example of a presentation UI.

Fig. 34 illustrates a display example of a presentation UI that presents an index value of biodiversity of each of the target ecosystem and the reference ecosystem.

On the presentation UI in Fig. 34, an ecosystem E1 is a target ecosystem and an ecosystem E2 is a reference ecosystem, and interaction networks of the target ecosystem E1 and the reference ecosystem E2 are displayed with their index values of biodiversity being displayed in the form of bar graphs.

An interaction network of an ecosystem is a (network) graph in which observed species observed in the ecosystem and interacting biological species that interact with the observed species are nodes, and the interactions are links (edges). The greater the complexity of an ecosystem network, the greater the number of observed species and interacting biological species that make up an interaction network as well as the number of interactions.

The product of the number of observed species and the number of interactions is displayed as an index value of biodiversity. Furthermore, the number of observed species and the number of interactions, which are used to calculate the index value of biodiversity, are also displayed. Therefore, the user can easily ascertain whether the product of the number of observed species and the number of interactions, which is an index value of biodiversity, is large or small, as well as whether each of the number of observed species and the number of interactions, which are used to calculate the index value of biodiversity, is large or small and their balance. Furthermore, the user can intuitively ascertain the index value of biodiversity (such as the reason why the index value is what it is).

Fig. 35 illustrates a ninth display example of a presentation UI.

Fig. 35 illustrates a display example of a presentation UI that presents index values of biodiversity, carbon stock, and carbon flow for each of the target ecosystems E1 to E3.

On the presentation UI in Fig. 35, an image is displayed in which in a two-dimensional coordinate system with biodiversity on the horizontal axis and (amount of) carbon flow on the vertical axis as a condition space (plane) indicating the conditions of the target ecosystems, and circles representing the index values of biodiversity and carbon flow (hereinafter also referred to as index circles) are plotted in that condition space. The size (radius) of an index circle corresponds to an index value of carbon stock, and is, for example, proportional to the index value.

Furthermore, on the presentation UI in Fig. 35, threshold values for the index values of biodiversity and carbon flow in the condition space are also displayed. The threshold values may be set by the user, may be set in advance, or may be set based on the index values of biodiversity and others of a reference ecosystem. In Fig. 35, zero, which corresponds to carbon neutral, is set as the threshold value for the index value of carbon flow. Therefore, the vertical position of the index circle representing the index value of carbon flow with respect to the threshold value of zero allows the user to easily ascertain whether the condition of each of the target ecosystems E1 to E3 is carbon neutral, carbon negative, or carbon positive.

On the presentation UI in Fig. 35, the index values of biodiversity and carbon flow of each of the target ecosystems E1 to E3 are displayed along with the threshold values for the index values. In other words, it can be said that whether the biodiversity and carbon flow of the condition of each of the target ecosystems E1 to E3 as assessment results are high or low with respect to their threshold values are displayed.

Although the threshold value for the index value of carbon stock represented by the size of the index circle is not displayed in Fig. 35, the threshold value for the index value of carbon stock may also be displayed. For example, a circle representing the threshold value for the index value of carbon stock, but displayed in a different manner from the index circle, for example, in a different color, may be displayed so that its center coincides with the corresponding index circle.

All or part of the above configuration examples may be combined to the extent that no contradiction occurs. For example, the biodiversity index value calculation unit 51 may be configured by combining any two or more of the first configuration example in Fig. 8, the second configuration example in Fig. 9, and the third configuration example in Fig. 25. For example, the assessment unit 43 may be configured by combining the second configuration example in Fig. 16, the third configuration example in Fig. 18, or the fourth configuration example in Fig. 19 with the fifth configuration example in Fig. 21. Furthermore, for example, the assessment unit 43 may be configured by combining the candidate specification unit 141 of the third configuration example in Fig. 18 with the fifth configuration example in Fig. 21.

The processing performed by the computer in accordance with the program described herein may not necessarily be performed chronologically in the order described as the flowcharts. In other words, the processing performed by the computer in accordance with the program also includes processing that is performed in parallel or individually (e.g., parallel processing or processing by objects).

The program may be a program processed by one computer (processor) or may be distributed and processed by a plurality of computers. Furthermore, the program may be transferred to a remote computer to be executed.

Moreover, a system as used herein means a collection of a plurality of constituent elements (including devices and modules (components)) regardless of whether all the constituent elements are contained in the same casing. Accordingly, a plurality of devices accommodated in separate casings and connected via a network and one device in which a plurality of modules are accommodated in one casing both constitute systems.

Embodiments of the present technology are not limited to the above-described embodiments, and various modifications can be made without departing from the scope and spirit of the present technology.

For example, the present technology may be configured as cloud computing in which a single function is cooperatively processed in a distributed manner via a network.

Additionally, each step described in the flowchart discussed above can be executed by a single device, or executed by a plurality of devices in a distributed manner.

Furthermore, when a single step includes a plurality of types of processing, the plurality of types of processing included in the single step can be performed by a single device, or in a distributed manner by a plurality of devices.

Moreover, the advantageous effects described herein are merely exemplary and are not restrictive, and other advantageous effects may be produced.

The present technology may be related to at least Goal 1 "No Poverty", Goal 2 "Zero Hunger", Goal 13 "Climate Action", and Goal 15 "Life on Land" of the Sustainable Development Goals (SDGs) adopted at the United Nations Summit in 2015.

Synecoculture (registered trademark) used in the present technology makes it possible to increase the biodiversity and cultivate plants by controlling the ecosystem so that it can withstand climate change caused by natural disasters such as droughts and landslides. In addition, it creates a densely mixed plant environment, making it possible to increase the amount of greenhouse gas (GHG) fixation and further contribute to reducing greenhouse gas emissions without the use of fertilizers or pesticides.

The present technology can also be configured as follows.
<1> An information processing device including an assessment unit that assesses, based on biodiversity, carbon stock, and carbon flow of a target ecosystem that is to be assessed, a condition of the target ecosystem.
<2> The information processing device according to <1>, further including a calculation unit that calculates an index value of each of the biodiversity, the carbon stock, and the carbon flow,
   wherein the assessment unit assesses the condition of the target ecosystem, based on the index value of each of the biodiversity, the carbon stock, and the carbon flow.
<3> The information processing device according to <2>, wherein the calculation unit calculates the index value of the biodiversity, based on an interaction with observed species observed in the target ecosystem.
<4> The information processing device according to <2> or <3>, wherein the calculation unit calculates the index value of the biodiversity, based on a number of observed species observed in the target ecosystem that contribute to an ecosystem service.
<5> The information processing device according to any one of <2> to <4>, wherein the calculation unit calculates the index value of the carbon flow, based on a stock difference between an amount of carbon stock acquired at a predetermined acquisition timing in the target ecosystem and an amount of carbon stock acquired at a next acquisition timing.
<6> The information processing device according to <5>, wherein the calculation unit calculates the index value of the carbon flow, based on an amount of carbon released for creation of the target ecosystem during an acquisition span from the predetermined acquisition timing to the next acquisition timing.
<7> The information processing device according to <6>, wherein the amount of carbon released for creation of the target ecosystem during the acquisition span includes an amount of emitted carbon resulting from a manufacturing process of chemical fertilizers used in the target ecosystem during the acquisition span, an amount of emitted carbon resulting from a manufacturing process of pesticides used in the target ecosystem during the acquisition span, or an amount of emitted carbon resulting from a manufacturing process and combustion of fuels consumed in the target ecosystem during the acquisition span.
<8> The information processing device according to any one of <2> to <7>, wherein the assessment unit compares the index value of each of the biodiversity, the carbon stock, and the carbon flow with a threshold value.
<9> The information processing device according to <8>, further including a threshold value setting unit that sets the threshold value.
<10> The information processing device according to <9>, wherein the threshold value setting unit sets the threshold value, based on an index value of each of the biodiversity, the carbon stock, and the carbon flow of a reference ecosystem to be compared with the target ecosystem.
<11> The information processing device according to <10>, wherein the threshold value setting unit sets a plurality of threshold values.
<12> The information processing device according to <11>, wherein the threshold value setting unit sets the plurality of threshold values, based on an index value of each of the biodiversity, the carbon stock, and the carbon flow of a plurality of the reference ecosystems.
<13> The information processing device according to any one of <10> to <12>, further including a candidate specification unit that specifies a candidate for the reference ecosystem.
<14> The information processing device according to <10>, wherein the reference ecosystem is an ecosystem in a different place from the target ecosystem, or an ecosystem in a same place as the target ecosystem but at a different time.
<15> The information processing device according to any one of <10> to <14>, wherein the assessment unit outputs, as an assessment result of the condition of the target ecosystem, a time of stock excess when an accumulated value of the carbon flow of the target ecosystem becomes equal to or greater than the carbon stock of the reference ecosystem.
<16> The information processing device according to any one of <2> to <15>, further including a generation unit that generates a presentation user interface (UI) that presents an assessment result of the condition of the target ecosystem.
<17> The information processing device according to <16>, wherein the generation unit generates the presentation UI that presents one or more of the index values of the biodiversity, the carbon stock, and the carbon flow.
<18> The information processing device according to <16> or <17>, wherein the generation unit generates the presentation UI that presents a message based on the assessment result of the condition of the target ecosystem or the index value of each of the biodiversity, the carbon stock, and the carbon flow.
<19> An information processing method including assessing, based on biodiversity, carbon stock, and carbon flow of a target ecosystem that is to be assessed, a condition of the target ecosystem.
<20> A program causing a computer to function as an assessment unit that assesses, based on biodiversity, carbon stock, and carbon flow of a target ecosystem that is to be assessed, a condition of the target ecosystem.

### [Reference Signs List]

- 10: Information processing system
- 11-1 to 11-4: Terminal
- 12: Server
- 13: DB
- 14: Network
- 21: Communication unit
- 22: Computation unit
- 23: Input/output unit
- 24: Storage
- 25: Positioning unit
- 26: Sensor unit
- 31: Communication unit
- 32: Computation unit
- 33: Input/output unit
- 34: Storage
- 41: Acquisition unit
- 42: Calculation unit
- 43: Assessment unit
- 44: Generation unit
- 51: Biodiversity index value calculation unit
- 52: Carbon stock index value calculation unit
- 53: Carbon flow index value calculation unit
- 61: Species number calculation unit
- 71: Interaction number calculation unit
- 72: Index value calculation unit
- 81: Unit stock amount calculation unit
- 91: Storage unit
- 92: Stock difference calculation unit
- 93: Unit flow amount calculation unit
- 112: Fixed carbon amount calculation unit
- 113: Carbon flow amount calculation unit
- 121: Biodiversity determination unit
- 122: Carbon stock determination unit
- 123: Carbon flow determination unit
- 131: Distribution estimation unit
- 132: Threshold value setting unit
- 133: Determination unit
- 141: Candidate specification unit
- 151: Distribution estimation unit
- 152: Threshold value setting unit
- 153: Determination unit
- 161: Carbon flow prediction unit
- 162: Accumulation unit
- 163: Carbon stock prediction unit
- 164: Determination unit
- 181: Interacting biological species detection unit
- 182: Contributing service detection unit

## Claims

1. An information processing device comprising an assessment unit that assesses, based on biodiversity, carbon stock, and carbon flow of a target ecosystem that is to be assessed, a condition of the target ecosystem.

2. The information processing device according to claim 1, further comprising a calculation unit that calculates an index value of each of the biodiversity, the carbon stock, and the carbon flow,
wherein the assessment unit assesses the condition of the target ecosystem, based on the index value of each of the biodiversity, the carbon stock, and the carbon flow.

3. The information processing device according to claim 2, wherein the calculation unit calculates the index value of the biodiversity, based on an interaction with observed species observed in the target ecosystem.

4. The information processing device according to claim 2, wherein the calculation unit calculates the index value of the biodiversity, based on a number of observed species observed in the target ecosystem that contribute to an ecosystem service.

5. The information processing device according to claim 2, wherein the calculation unit calculates the index value of the carbon flow, based on a stock difference between an amount of carbon stock acquired at a predetermined acquisition timing in the target ecosystem and an amount of carbon stock acquired at a next acquisition timing.

6. The information processing device according to claim 5, wherein the calculation unit calculates the index value of the carbon flow, based on an amount of carbon released for creation of the target ecosystem during an acquisition span from the predetermined acquisition timing to the next acquisition timing.

7. The information processing device according to claim 6, wherein the amount of carbon released for creation of the target ecosystem during the acquisition span includes an amount of emitted carbon resulting from a manufacturing process of chemical fertilizers used in the target ecosystem during the acquisition span, an amount of emitted carbon resulting from a manufacturing process of pesticides used in the target ecosystem during the acquisition span, or an amount of emitted carbon resulting from a manufacturing process and combustion of fuels consumed in the target ecosystem during the acquisition span.

8. The information processing device according to claim 2, wherein the assessment unit compares the index value of each of the biodiversity, the carbon stock, and the carbon flow with a threshold value.

9. The information processing device according to claim 8, further comprising a threshold value setting unit that sets the threshold value.

10. The information processing device according to claim 9, wherein the threshold value setting unit sets the threshold value, based on an index value of each of the biodiversity, the carbon stock, and the carbon flow of a reference ecosystem to be compared with the target ecosystem.

11. The information processing device according to claim 10, wherein the threshold value setting unit sets a plurality of threshold values.

12. The information processing device according to claim 11, wherein the threshold value setting unit sets the plurality of threshold values, based on an index value of each of the biodiversity, the carbon stock, and the carbon flow of a plurality of the reference ecosystems.

13. The information processing device according to claim 10, further comprising a candidate specification unit that specifies a candidate for the reference ecosystem.

14. The information processing device according to claim 10, wherein the reference ecosystem is an ecosystem in a different place from the target ecosystem, or an ecosystem in a same place as the target ecosystem but at a different time.

15. The information processing device according to claim 10, wherein the assessment unit outputs, as an assessment result of the condition of the target ecosystem, a time of stock excess when an accumulated value of the carbon flow of the target ecosystem becomes equal to or greater than the carbon stock of the reference ecosystem.

16. The information processing device according to claim 2, further comprising a generation unit that generates a presentation user interface (UI) that presents an assessment result of the condition of the target ecosystem.

17. The information processing device according to claim 16, wherein the generation unit generates the presentation UI that presents one or more of the index values of the biodiversity, the carbon stock, and the carbon flow.

18. The information processing device according to claim 16, wherein the generation unit generates the presentation UI that presents a message based on the assessment result of the condition of the target ecosystem or the index value of each of the biodiversity, the carbon stock, and the carbon flow.

19. An information processing method comprising assessing, based on biodiversity, carbon stock, and carbon flow of a target ecosystem that is to be assessed, a condition of the target ecosystem.

20. A program causing a computer to function as an assessment unit that assesses, based on biodiversity, carbon stock, and carbon flow of a target ecosystem that is to be assessed, a condition of the target ecosystem.
